(19) **Europäisches Patentamt / European Patent Office / Office européen des brevets**

(11) **EP 3 918 292 B1**

(12) **FASCICULE DE BREVET EUROPEEN**

(45) Date de publication et mention de la délivrance du brevet:
**19.11.2025 Bulletin 2025/47**

(21) Numéro de dépôt: **20706107.8**

(22) Date de dépôt: **31.01.2020**

(51) Classification Internationale des Brevets (IPC):
**G01N 21/64** *(2006.01)*   **G02B 21/06** *(2006.01)*

(52) Classification Coopérative des Brevets (CPC):
**G01J 9/00; G01J 3/4406; G02B 21/0032; G02B 21/0076; G02B 21/06; G02B 21/16; G02B 21/365; G02B 21/367;** G01J 2009/002; G01N 21/6458

(86) Numéro de dépôt international:
**PCT/EP2020/052403**

(87) Numéro de publication internationale:
**WO 2020/157265 (06.08.2020 Gazette 2020/32)**

(54) **DISPOSITIFS D'ANALYSE DE FRONT D'ONDE ET SYSTEMES D'IMAGERIE MICROSCOPIQUE COMPRENANT DE TELS DISPOSITIFS D'ANALYSE**

VORRICHTUNG ZUR WELLENFRONTANALYSE UND MIKROSKOPISCHE ABBILDUNGSSYSTEME MIT SOLCHEN ANALYSEVORRICHTUNGEN

DEVICE FOR WAVEFRONT ANALYSIS AND MICROSCOPIC IMAGING SYSTEMS COMPRISING SUCH ANALYSIS DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.02.2019 FR 1901011**

(43) Date de publication de la demande:
**08.12.2021 Bulletin 2021/49**

(73) Titulaire: **Imagine Optic**
**91400 Orsay (FR)**

(72) Inventeurs:
• **HARMS, Fabrice**
**91400 ORSAY (FR)**
• **LEVECQ, Xavier**
**91190 Gif sur Yvette (FR)**

(74) Mandataire: **Osha BWB**
**2, rue de la Paix**
**75002 Paris (FR)**

(56) Documents cités:
**US-A1- 2016 349 110**

• **MICHAU V. ET AL:** "Shack-Hartmann wavefront sensing with extended sources", LASER-BASED MICRO- AND NANOPACKAGING AND ASSEMBLY II, vol. 6303, 31 August 2006 (2006-08-31), pages 63030B, XP093074710, ISSN: 0277-786X, DOI: 10.1117/12.682728
• **LAWRENCE KEELAN ET AL:** "Scene-based Shack-Hartmann wavefront sensor for light-sheet microscopy", PROGRESS IN BIOMEDICAL OPTICS AND IMAGING, SPIE - INTERNATIONAL SOCIETY FOR OPTICAL ENGINEERING, BELLINGHAM, WA, US, vol. 10502, 23 February 2018 (2018-02-23), pages 105020B - 105020B, XP060100033, ISSN: 1605-7422, ISBN: 978-1-5106-0027-0, DOI: 10.1117/12.2288777
• **RAPHAEL JORAND ET AL:** "Deep and Clear Optical Imaging of Thick Inhomogeneous Samples", PLOS ONE, vol. 7, no. 4, 25 April 2012 (2012-04-25), pages e35795, XP055419329, DOI: 10.1371/journal.pone.0035795
• **IMAGINE OPTICS:** "HASO Imagine Optics", 9 February 2014 (2014-02-09), XP055644048, Retrieved from the Internet <URL:https://axiomoptics.com/Brochures/haso3_web.pdf> [retrieved on 20191119]

- LISA A. POYNEER ET AL: "Spatially filtered wave-front sensor for high-order adaptive optics", JOURNAL OF THE OPTICAL SOCIETY OF AMERICA A, vol. 21, no. 5, 1 May 2004 (2004-05-01), US, pages 810, XP055643706, ISSN: 1084-7529, DOI: 10.1364/JOSAA.21.000810
- HATTORI MASAYUKI ET AL: "The development of an adaptive optics system and its application to biological microscope", PROCEEDINGS OF SPIE; [PROCEEDINGS OF SPIE ISSN 0277-786X VOLUME 10524], SPIE, US, vol. 10021, 31 October 2016 (2016-10-31), pages 1002106 - 1002106, XP060081077, ISBN: 978-1-5106-1533-5, DOI: 10.1117/12.2246440
- JAE WON CHA ET AL: "Shack-Hartmann wavefront-sensor-based adaptive optics system for multiphoton microscopy", JOURNAL OF BIOMEDICAL OPTICS, vol. 15, no. 4, 1 January 2010 (2010-01-01), pages 046022, XP055643893, ISSN: 1083-3668, DOI: 10.1117/1.3475954

**Description**

La présente invention contient une description et un jeu de revendications. Elle contient également des figures, un abrégé et une figure d'abrégé.

Domaine technique de l'invention

La présente description concerne des dispositifs d'analyse de front d'onde, des systèmes d'imagerie microscopique comprenant de tels dispositifs d'analyse et des méthodes d'imagerie microscopique utilisant de tels dispositifs d'analyse. La présente description concerne plus particulièrement des systèmes et méthodes d'imagerie microscopique de fluorescence à sectionnement optique, par exemple des systèmes et méthodes d'imagerie microscopique de fluorescence à feuille de lumière ou multiphotonique.

Etat de la technique

En imagerie microscopique, notamment à haute résolution, la qualité de l'image en termes de résolution et de contraste est directement liée au front d'onde incident sur le détecteur d'imagerie, par exemple une caméra. Le front d'onde, c'est-à-dire la surface d'égale phase d'une onde est, dans un système d'imagerie microscopique, perturbé à la fois par les défauts optiques introduits par des éléments optiques du système d'imagerie, comme par exemple des défauts de réalisation des éléments optiques, des défauts d'alignement, des variations d'indice de réfraction entre le milieu d'immersion de l'objectif de microscope et l'objet, et par l'objet lui-même. Ceci est particulièrement vrai dans le cas d'objets biologiques transparents ou partiellement transparents, lors de la réalisation d'une image correspondant à un plan en profondeur dans l'objet ; en effet, dans les objets biologiques, la répartition spatiale de l'indice de réfraction est inhomogène à l'échelle microscopique du fait de la complexité des structures biologiques. Les rayons issus de différents points d'un plan en profondeur dans l'objet sont donc perturbés par les couches successives traversées dans l'objet. Le front d'onde issu de chacun de ces points est ainsi différent d'un front d'onde parfait, ce dernier étant défini comme un front d'onde plan ou sphérique et l'image microscopique correspondante est dégradée en conséquence.

L'optique adaptative (OA) est une technique permettant de modifier dynamiquement un front d'onde, et, en particulier lorsque la technique est utilisée dans un système d'imagerie, de corriger les éventuels défauts du front d'onde en chaque point de manière à restaurer la qualité des images produites par ledit système. Typiquement, un système d'OA comprend trois éléments principaux : un dispositif d'analyse (ou mesure) du front d'onde, un dispositif de correction du front d'onde, et un dispositif de contrôle permettant de transformer un paramètre issu de l'analyse du front d'onde en une correction optimale à appliquer par le dispositif de correction. Lorsqu'elle est employée en imagerie microscopique, l'OA permet d'améliorer de façon significative les performances d'imagerie en corrigeant les défauts optiques introduits par le système optique et l'objet d'intérêt, selon diverses mises en œuvre particulières, telles que décrites par exemple dans « Adaptive optics for fluorescence microscopy », de M. J. Booth *et al.* [Réf 1].

Les méthodes de mise en œuvre de l'OA en imagerie microscopique développées jusqu'à ce jour reposent toutes sur l'usage d'un dispositif de correction du front d'onde permettant de modifier localement la phase d'une onde optique. Parmi les dispositifs de correction, on connaît par exemple les miroirs déformables, les modulateurs à cristaux liquides (ou SLM pour « Spatial Light Modulator »), ou encore des lentilles déformables. Un miroir déformable par exemple comprend une membrane réfléchissante et un ensemble d'actionneurs permettant de déformer localement la membrane de manière contrôlée.

Les méthodes de mise en œuvre de l'OA en imagerie microscopique diffèrent cependant quant aux méthodes de mesure des défauts optiques, en vue de la correction. On peut distinguer deux grandes catégories pour la mesure des défauts optiques : les méthodes de mesure indirecte basées sur l'analyse de l'image produite par le microscope au moyen de critères de qualité représentatifs de la qualité du front d'onde ayant conduit à la formation de ladite image, et les méthodes de mesure directe des défauts optiques au moyen d'analyseurs de front d'onde, par exemple des analyseurs de type Shack-Hartmann.

La première approche (mesure indirecte) permet une mise en œuvre instrumentale simplifiée - et donc moins coûteuse - du fait de l'absence d'analyseur de front d'onde. Cependant, elle est basée sur une optimisation globale nécessitant l'usage d'algorithmes itératifs, dont la robustesse de convergence, la vitesse d'exécution et la calibration sont limitants, en particulier dans le cas de l'imagerie dynamique d'objets vivants.

Ainsi, notamment pour l'imagerie microscopique d'objets biologiques, les méthodes basées sur la mesure directe des défauts optiques couplée à une correction de front d'onde, ont démontré leur capacité à obtenir une très bonne correction des défauts optiques introduits par le système d'imagerie et l'objet, et une amélioration substantielle du contraste et de la résolution des images. De telles méthodes sont décrites par exemple dans l'article de revue de N. Ji « *Adaptive optical fluorescence microscopy* » [Réf. 2].

Cependant l'approche de mesure directe des défauts optiques reste complexe dans sa mise en œuvre ; en effet, il est généralement nécessaire de disposer pour cette mesure d'un « point source » émettant un front d'onde unique. Aujourd'hui, les approches les plus efficaces consistent à induire ou à isoler optiquement un volume émetteur de lumière (également appelé « étoile artificielle ou « guide star ») au sein de l'image. Selon un premier exemple, l'étoile artificielle est créée par l'emploi de billes fluorescentes, de taille sensiblement égale à la limite de diffraction de l'objectif de microscope utilisé, placées dans l'objet d'intérêt, comme décrit dans le brevet US855730 B2 [Réf. 3], ce qui nécessite une modification substantielle de l'objet. Voir aussi l'article de R. Jorand *et al.* [Réf. 6] ou l'article de H. Masayuki *et al.* [Réf. 7]. Selon un second exemple décrit dans la demande de brevet publiée US 2015/0362713 [Réf. 4], l'étoile artificielle est créée à l'aide d'un laser ultrabref générant localement dans l'objet d'intérêt un volume d'émission de fluorescence à 2 photons.

Ces approches imposent une mise en œuvre complexe en imagerie microscopique, que ce soit d'un point de vue de la préparation de l'objet d'intérêt ou du design instrumental. De plus, l'utilisation d'un point source comme source de front d'onde rend la mesure des défauts optiques induites par l'objet - et donc la correction par OA correspondante - valide uniquement sur un champ limité par le domaine d'isoplanétisme de l'objet, c'est-à-dire le champ au niveau du plan d'imagerie de l'objet pour lequel les défauts optiques varient de manière suffisamment faible pour que l'image correspondante ne montre aucune dégradation significative. Or la majorité des objets biologiques d'intérêt en microscopie de haute résolution sont constitués de multiples structures microscopiques correspondant à des fluctuations de phase significatives : le domaine d'isoplanétisme est en général limité à une centaine de microns carré, ce qui représente une limitation importante pour l'étude à forte résolution spatio-temporelle de structures larges, comme par exemple l'étude de réseaux neuronaux dans le domaine de la neuroimagerie.

Très récemment, il a été proposé dans un système d'imagerie microscopique de type « feuille de lumière » (ou « light sheet » selon l'expression anglo-saxonne), une méthode d'OA qui s'affranchit de l'utilisation d'un point source pour la mesure des défauts optiques, décrite dans l'article de K. Lawrence et al. « Scene-based Shack-Hartmann wavefront sensor for light-sheet microscopy » [Réf. 5]. Pour cela, il est proposé un analyseur de front d'onde de type Shack-Hartmann dans lequel chaque microlentille de l'analyseur forme une image d'un objet étendu. L'analyse du front d'onde est faite au moyen d'opérations de corrélations croisées ou « intercorrélations » entre les images formées par les différentes microlentilles, permettant d'obtenir une carte bidimensionnelle des gradients locaux du front d'onde.

La déposante a cependant mis en évidence des limitations de la méthode ci-dessus décrite. En effet, en pratique, on observe des recouvrements entre les images formées par les microlentilles, ces recouvrements pouvant induire des erreurs dans les calculs d'intercorrélation et des imprécisions dans l'analyse du front d'onde. Par ailleurs, la méthode décrite ne permet d'effectuer qu'une analyse du front d'onde moyen sur un champ donné sans prendre en compte les domaines d'isoplanétisme de l'objet.

La présente description a pour objet notamment de proposer un dispositif d' analyse de front d'onde permettant de s'affranchir de toutes ou partie des limitations précitées.

Résumé de l'invention

Selon un premier aspect, la présente description concerne un système d'imagerie microscopique de fluorescence à sectionnement optique d'un objet volumique et fluorescent selon la revendication 1.

Un front d'onde au sens de la présente description est la surface d'égale phase d'une onde lumineuse.

Selon la présente description, un paramètre caractéristique du front d'onde comprend un gradient local (ou pente locale) selon deux dimensions du front d'onde dans le plan d'analyse.

Selon la présente description, la détermination d'une carte bidimensionnelle du gradient local comprend la détermination des variations des positions des images formées par les microlentilles, les variations étant mesurées par rapport à des positions de référence d'images formées avec un front d'onde de référence, par exemple un front d'onde plan. Selon la présente description, les variations des positions des images formées par les microlentilles sont déterminées par des opérations d'intercorrélations entre les images.

Selon un ou plusieurs exemples de réalisation, un paramètre caractéristique du front d'onde comprend en outre un écart local du front d'onde intercepté dans le plan d'analyse par rapport à un front d'onde de référence correspondant à une onde lumineuse qui n'aurait pas subi de défauts optiques, par exemple un front d'onde plan. La carte bidimensionnelle desdits écarts locaux du front d'onde par rapport à un front d'onde de référence peut être obtenue à partir de la carte bidimensionnelle des pentes locales du front d'onde.

Les déposants ont démontré que le dispositif d'analyse du front d'onde ainsi décrit permettait par rapport aux dispositifs connus de l'état de l'art une très forte amélioration de la précision de l'analyse, tout en s'affranchissant de la génération d'une étoile artificielle. En effet, le diaphragme de champ ainsi agencé dans le dispositif d'analyse de front d'onde permet de contrôler la taille de l'image formée par chaque microlentille au niveau du plan de détection et de limiter le recouvrement entre deux images formées par deux microlentilles adjacentes, sans limiter pour autant la taille du champ imagé par le système d'imagerie microscopique auquel ledit dispositif d'analyse du front d'onde est connecté.

On appelle « microlentille » au sens de la présente description tout élément optique de focalisation de dimensions latérales (c'est-à-dire mesurées dans le plan d'analyse) inférieures ou égales à 5mm, présentant une distance focale inférieure ou égale à 20 mm et une taille de pupille inférieure ou égale à 5 mm. Une microlentille peut comprendre par exemple un matériau transparent avec deux dioptres dont l'un au moins n'est pas plan, le dioptre non plan étant par exemple un dioptre convexe, par exemple un dioptre sphérique.

Selon un ou plusieurs exemples de réalisation, lesdites microlentilles de la matrice de microlentille sont identiques, par exemple agencées selon une matrice bidimensionnelle.

Selon un ou plusieurs exemples de réalisation, lesdites microlentilles de la matrice de microlentilles sont jointives et de pupille carrée.

Selon un ou plusieurs exemples de réalisation, le diaphragme de champ est un diaphragme de champ en transmission et comprend par exemple une ouverture de dimensions finies données. Selon un ou plusieurs exemples de réalisation, le diaphragme de champ est un diaphragme de champ en réflexion et comprend un élément réfléchissant de dimensions finies données. Dans la suite de la description, la forme et/ou les dimensions du diaphragme de champ peuvent se référer, sauf indication contraire, aussi bien à la forme et/ou aux dimensions d'une ouverture pour un diaphragme de champ en transmission qu'à la forme et/ou aux dimensions d'un élément réfléchissant pour un diaphragme de champ en réflexion.

Selon un ou plusieurs exemples de réalisation, le diaphragme de champ présente une forme similaire à la forme d'une pupille d'une microlentille.

Selon un ou plusieurs exemples de réalisation, le diaphragme de champ comprend des dimensions déterminées pour que deux images adjacentes formées par deux microlentilles adjacentes ne présentent aucun recouvrement.

En particulier, selon un ou plusieurs exemples de réalisation, le dispositif de d'analyse comprend en outre un ou plusieurs élément(s) optique(s) permettant d'effectuer la conjugaison optique entre le plan du diaphragme de champ et le plan de détection, et les dimensions du diaphragme de champ sont inférieures ou égales aux dimensions d'une microlentille divisées par le grandissement optique défini par le ou les élément(s) optique(s).

Selon un ou plusieurs exemples de réalisation, ledit ou lesdits élément(s) optique(s) comprennent ledit système optique relai.

Ainsi, selon un ou plusieurs exemples de réalisation, pour une matrice de microlentilles jointives carrées dont chaque microlentille a un côté de taille $d_m$, si ledit grandissement optique est G, le diaphragme de champ comprend une forme carrée et de taille $d_m/G$.

Selon un ou plusieurs exemples de réalisation, le diaphragme de champ a des dimensions inférieures ou égales à un champ d'analyse correspondant à un domaine d'isoplanétisme donné.

Un domaine d'isoplanétisme est défini comme un champ fini de l'objet au sein duquel les défauts optiques varient de manière suffisamment faible. Ainsi, des mesures de front d'onde issus de zones prises en tout point d'un domaine d'isoplanétisme présentent dans un plan d'analyse donné les mêmes défauts de front d'onde, à une fraction de longueur d'onde d'analyse près, par exemple au quart de la longueur d'onde d'analyse près. En pratique, cela signifie que la même correction peut être appliquée pour corriger le front d'onde dans tout le domaine d'isoplanétisme.

Selon un ou plusieurs exemples de réalisation, le diaphragme de champ présente des dimensions variables. Il est ainsi possible de faire varier la taille du champ d'analyse, ce qui permet de déterminer un champ d'isoplanétisme de l'objet. Par exemple, un domaine d'isoplanétisme de l'objet est déterminé en réalisant une série de mesures de front d'onde, chaque mesure étant réalisée pour une taille du diaphragme de champ décroissante à partir de la taille maximale, le domaine d'isoplanétisme correspond à la taille la plus grande à partir de laquelle le front d'onde mesuré ne montre pas de changement significatif, c'est-à-dire pas de changement supérieur à une fraction de la longueur d'onde d'analyse, par exemple pas de changement supérieur au quart de la longueur d'onde d'analyse.

Selon un ou plusieurs exemples de réalisation, la taille est variable entre une taille pour laquelle deux images adjacentes formées par deux microlentilles adjacentes ne présentent aucun recouvrement et une taille inférieure.

Selon un ou plusieurs exemples de réalisation, le diaphragme de champ est de forme carrée, et la dimension du côté est variable.

Selon un ou plusieurs exemples de réalisation, la position du diaphragme de champ est variable dans ledit plan conjugué avec le plan de détection du dispositif d'analyse. Il est ainsi possible de mesurer le front d'onde en fonction de la position transverse du champ d'analyse par rapport au plan focal de l'objectif de microscope, ce qui permet le cas échéant l'application d'une correction optimale en fonction de ladite position à l'aide d'un système de correction des défauts optiques.

En effet, pour un objet complexe, le domaine d'isoplanétisme a une taille limitée. Le système d'imagerie microscopique image un champ d'imagerie de taille donné. Le champ d'analyse (de l'analyseur) a une taille typiquement inférieure, et le domaine d'isoplanétisme possiblement une taille encore inférieure. En déplaçant le diaphragme, il est possible de mesurer les défauts optiques du front d'onde à différente positons du champ d'imagerie, voire de déterminer le domaine d'isoplanétisme en ces différentes positions du champ d'imagerie.

Selon un ou plusieurs exemples de réalisation, le diaphragme de champ présente une transmission optique (respectivement une réflexion optique) structurée spatialement. La structuration de la transmission optique (respectivement la réflexion optique) permet de faire apparaitre des motifs d'intensité supplémentaires dans les images formées par les microlentilles, ce qui peut améliorer les intercorrélations entre les images lors du traitement des images.

Selon un ou plusieurs exemples de réalisation, ladite transmission optique (respectivement une réflexion optique) est structurée pour comprendre une alternance régulière de zones transparentes et de zones opaques selon une direction (respectivement une alternance régulière de zones réfléchissantes et de zones non réfléchissantes selon une direction), selon une fréquence spatiale supérieure ou égale à la fréquence de coupure des microlentilles de la matrice de microlentilles. Cette configuration particulière permet de faire apparaître dans les images de l'objet formées par les microlentilles des motifs d'intensité supplémentaires, issus d'un phénomène de Moiré. Cette configuration est particulièrement avantageuse dans le cas où l'objet contient uniquement des structures dont les fréquences spatiales sont supérieures à la fréquence de coupure des microlentilles de la matrice de microlentilles.

Selon un ou plusieurs exemples de réalisation, le détecteur bidimensionnel comprend un agencement bidimensionnel de détecteurs élémentaires et une tache de diffraction d'une microlentille comprend entre 0,2 et 5 détecteurs élémentaires selon une direction, avantageusement entre 0,2 et 2 détecteurs élémentaires selon une direction. On définit la dimension d'une tache de diffraction d'une microlentille selon une direction par la distance séparant les 2 premiers minima d'intensité situés de part et d'autre du maximum d'intensité. Les déposants ont montré que cette configuration particulière représentait un bon compromis entre la précision de mesure de front d'onde et la taille du champ d'analyse.

Dans la présente description, la fluorescence s'entend comme l'émission de lumière d'un objet résultant d'une excitation lumineuse par absorption de photons dans une bande spectrale d'absorption donnée. L'émission de lumière de fluorescence peut résulter d'un mécanisme linéaire à un photon ou d'un mécanisme non linéaire à deux photons ou plus, ce mécanisme pouvant résulter de l'interaction de la lumière absorbée avec un élément fluorescent constituant de l'objet ou avec un élément fluorescent ajouté à l'objet, comme par exemple, dans le cas d'un objet biologique, une protéine fluorescente.

Un objet volumique et fluorescent comprend ainsi tout objet comprenant des structures microscopiques, doté de propriétés de fluorescence intrinsèque ou rendu fluorescent par ajout d'un « marqueur ». Un objet volumique et fluorescent comprend par exemple un objet biologique comme une cellule, une culture de cellules, un animal, ces objets biologiques étant dotés de propriétés de fluorescence, qu'elles soient intrinsèquement constituantes de l'objet ou induites par ajout d'éléments fluorescents. Parmi les objets volumiques et fluorescents d'intérêt, on citera en particulier les structures neuronales fluorescentes d'un cerveau animal dans le cadre d'études en neuroimagerie.

Un système d'imagerie microscopique de fluorescence à sectionnement optique est au sens de la présente description un système d'imagerie équipé d'un objectif de microscope, dans lequel seule la lumière de fluorescence provenant d'une section optique de l'objet, perpendiculaire à un axe optique de l'objectif de microscope, est détectée. Une section optique peut être créée par différents procédés d'illumination de l'objet connus de l'état de l'art. Une section optique peut avoir une épaisseur de l'ordre de ou inférieure à la profondeur de champ de l'objectif de microscope.

L'analyse de front d'onde comprend la détermination d'une carte bidimensionnelle d'un paramètre caractéristique du front d'onde mesuré dans le plan d'analyse.

Le paramètre caractéristique comprend selon la présente description un gradient local (ou pente locale) selon deux dimensions du front d'onde dans le plan d'analyse.

Selon un ou plusieurs exemples de réalisation, l'unité de traitement est configurée pour déterminer, à partir de la carte bidimensionnelle des pentes locales, une carte bidimensionnelle de l'écart dudit front d'onde à un front d'onde de référence correspondant à une onde lumineuse sans défauts, par exemple un front d'onde plan. La carte bidimensionnelle de l'écart dudit front d'onde à un front d'onde de référence peut être utilisée pour déterminer une propriété de l'objet, par exemple la présence et la répartition d'inhomogénéités au sein de l'objet. Par exemple, dans le cas où l'objet est une cellule, l'indice de réfraction du noyau cellulaire est différent de celui du cytoplasme, une carte bidimensionnelle de l'écart du front d'onde à un front d'onde de référence peut permettre de visualiser le noyau cellulaire, et les valeurs du front d'onde en chaque point d'en déduire certaines propriétés de la cellule comme son état physiologique, alors que l'information d'intensité issue de la seule voie d'imagerie de l'objet ne permet pas d'obtenir de telles informations.

Selon un ou plusieurs exemples de réalisation, la voie d'imagerie comprend en outre une unité de traitement des signaux issus du détecteur d'imagerie. Bien entendu, en pratique, les unités de traitement de la voie d'analyse et de la voie d'imagerie peuvent être rassemblées au sein d'une même unité.

Selon un ou plusieurs exemples de réalisation, l'élément séparateur de faisceau est de type dichroïque, c'est-à-dire qu'il permet de séparer la lumière incidente selon une première bande spectrale en réflexion et selon une seconde bande spectrale différente de la première bande spectrale en transmission.

Selon un ou plusieurs exemples de réalisation, l'élément séparateur de faisceau de type dichroïque permet de séparer lesdites deux bandes spectrales vers la voie d'imagerie et vers la voie d'analyse.

Selon un ou plusieurs exemples de réalisation, la voie d'éclairage comprend au moins deux sources d'éclairage, une des sources étant destinée à l'excitation de fluorescence pour la voie d'imagerie, une autre source étant destinée à l'excitation de fluorescence pour la voie d'analyse, cette dernière étant configurée de manière à produire un éclairage structuré de l'objet selon un motif bidimensionnel en forme de croix.

Cette mise en œuvre permet dans le cas d'un objet produisant une émission de fluorescence uniforme ou très faiblement contrastée d'obtenir dans le plan de détection du dispositif d'analyse de front d'onde des images produites par les microlentilles du dispositif d'analyse de front d'onde selon une géométrie facilitant le calcul d'intercorrélation entre lesdites images.

Selon un ou plusieurs exemples de réalisation, le système d'imagerie microscopique selon le deuxième aspect comprend en outre un dispositif de correction du front d'onde comprenant un plan de correction conjugué optiquement avec le plan pupillaire de l'objectif de microscope. Ledit plan de correction est compris dans la voie d'analyse et le dispositif de correction est configuré pour corriger un front d'onde issu de l'objet et analysé par ledit dispositif d'analyse.

Par correction du front d'onde, on entend la modification locale de la phase de l'onde dans le plan de correction visant à obtenir un front d'onde de référence. Selon la destination de la méthode de correction de front d'onde, le front d'onde de référence peut être un front d'onde plan comme par exemple pour optimiser les performances d'un système d'imagerie, ou un front d'onde spécifique.

Un dispositif de correction de front d'onde comprend par exemple un miroir déformable généralement constitué d'une membrane et d'actionneurs permettant de modifier localement la position axiale de ladite membrane. Le dispositif de correction de front d'onde peut comprendre également un modulateur spatial de lumière ou SLM (abréviation de l'expression anglo-saxonne « Spatial Light Modulator »), généralement constitué d'un arrangement bidimensionnel de cellules à cristaux liquides couplées à des électrodes permettant de modifier localement l'indice de réfraction desdites cellules. Le dispositif de correction de front d'onde peut comprendre également une lentille déformable généralement constituée d'éléments actifs permettant de modifier localement la forme et/ou l'épaisseur de ladite lentille.

Selon un ou plusieurs exemples de réalisation, l'unité de traitement du dispositif d'analyse est configurée pour contrôler le dispositif de correction en fonction de l'analyse du front d'onde dans le plan d'analyse.

Selon un ou plusieurs exemples de réalisation, le système d'imagerie microscopique de fluorescence à sectionnement optique est de type « feuille de lumière ». La voie d'éclairage est alors configurée pour former ladite section optique par illumination transverse de l'objet.

Selon un ou plusieurs exemples de réalisation, le système d'imagerie microscopique de fluorescence de type « feuille de lumière » comprend un dispositif de correction et le plan de correction du dispositif de correction est commun à la voie d'analyse et à la voie d'imagerie. La correction du front d'onde au moyen du dispositif de correction permet d'améliorer la qualité de l'image, en particulier lorsque le plan focal de l'objectif de microscope est situé en profondeur de l'objet, grâce à la compensation des défauts optiques induits par les inhomogénéités de l'objet entre sa surface et ledit plan focal.

Selon un ou plusieurs exemples de réalisation, le système d'imagerie microscopique de fluorescence est de type multiphotonique.

Selon un ou plusieurs exemples de réalisation, la voie d'éclairage du système d'imagerie multiphotonique comprend :

- une ou plusieurs source(s) laser pour l'émission d'impulsions ultra brèves, ledit objectif de microscope permettant de focaliser chaque impulsion en un point de focalisation d'un plan focal dudit objectif pour former une émission de fluorescence multiphotonique,
- un dispositif de balayage configuré pour un balayage transverse dudit point de focalisation.

Selon un ou plusieurs exemples de réalisation, le système d'imagerie microscopique de fluorescence multiphotonique comprend un dispositif de correction et le plan de correction est commun à la voie d'analyse et à la voie d'éclairage. La correction du front d'onde au moyen du dispositif de correction permet d'améliorer la qualité de la focalisation dans l'objet, et par voie de conséquence le signal de fluorescence en chaque point de l'image, grâce à la compensation des défauts optiques induits par les inhomogénéités de l'objet entre sa surface et ledit plan focal à la traversée de chaque impulsion.

Selon un deuxième aspect, la présente description concerne des procédés d'imagerie microscopique de fluorescence à sectionnement optique mis en œuvre par des systèmes selon le premier aspect et ses différents modes de réalisation.

Plus précisément, la présente description concerne un procédé d'imagerie microscopique d'un objet selon la revendication 13.

Selon la présente description, l'analyse du front d'onde comprend la détermination d'une carte bidimensionnelle des pentes locales du front d'onde.

Selon un ou plusieurs exemples de réalisation, le procédé d'imagerie microscopique comprend en outre la correction d'un front d'onde issu de ladite section optique de l'objet dans un plan de correction conjugué avec un plan pupillaire de l'objectif de microscope, ledit plan de correction étant positionné dans la voie d'analyse.

Selon un ou plusieurs exemples de réalisation, l'élément séparateur de faisceau est de type dichroïque, l'imagerie est réalisée dans une première bande spectrale et l'analyse est réalisée dans une deuxième bande spectrale, distincte de la première bande spectrale.

Cette mise en œuvre est par exemple rendue possible par l'introduction de deux types d'éléments fluorescents au sein de l'objet, et permet de ne pas utiliser de photons de la lumière fluorescente d'émission destinée à former l'image de l'objet pour effectuer l'analyse du front d'onde, ce qui est particulièrement critique dans le cas d'objets faiblement fluorescents comme cela est généralement le cas pour les objets biologiques.

Selon la présente description, l'illumination de l'objet comprend une première illumination pour l'excitation de fluorescence pour la voie d'imagerie, et une deuxième illumination pour l'excitation de fluorescence pour la voie d'analyse, la deuxième illumination produisant un éclairage structuré de l'objet selon un motif bidimensionnel en forme de croix.

Selon un ou plusieurs exemples de réalisation, le diaphragme de champ est de dimensions variables et le procédé d'imagerie microscopique comprend en outre l'analyse du front d'onde pour différentes dimensions du diaphragme de champ et la détermination d'au moins un domaine d'isoplanétisme à partir des différentes analyses du front d'onde.

Selon un ou plusieurs exemples de réalisation, la position du diaphragme de champ est variable dans le plan du diaphragme de champ et le procédé d'imagerie microscopique comprend en outre l'analyse du front d'onde pour différentes positions du diaphragme de champ et la détermination d'une pluralité de domaines d'isoplanétisme à partir des différentes analyses du front d'onde.

Selon un ou plusieurs exemples de réalisation, le procédé d'imagerie microscopique comprend en outre la correction séquentielle d'un front d'onde issu de ladite section optique de l'objet en différentes zones du champ, en fonction de ladite pluralité des domaines d'isoplanétisme.

Brève description des figures

D'autres avantages et caractéristiques de l'invention apparaîtront à la lecture de la description, illustrée par les figures suivantes :

[Fig. 1] représente un schéma illustrant un exemple de dispositif d'analyse de front d'onde selon la présente description, connecté à un système d'imagerie microscopique ;
[Fig. 2A] représente des images formées par une matrice de microlentilles dans un plan de détection d'un dispositif d'analyse de front d'onde selon la présente description, selon un exemple ;
[Fig. 2B] représente une image formée sur un plan de détection d'imagerie d'un système d'imagerie, dans un système de d'imagerie microscopique selon la présente description, selon un exemple ;
[Fig. 3] représente une image d'un objet biologique formée sur un plan de détection d'imagerie d'un système d'imagerie, ainsi que des images formées dans un plan de détection par une matrice de microlentilles d'un dispositif d'analyse de front d'onde selon un exemple de la présente description, pour deux champs d'analyse de tailles et positions différentes définies par les tailles et positions du diaphragme de champ ;
[Fig. 4] représente un schéma illustrant un exemple de système d'imagerie microscopique de fluorescence de type « feuille de lumière », selon la présente description ;
[Fig. 5] représente un schéma illustrant un exemple de système d'imagerie microscopique de fluorescence de type « multiphotonique », selon la présente description ;

microscope; la voie d'analyse étant séparée de la voie d'imagerie au moyen d'un séparateur de faisceaux.

Selon un ou plusieurs exemples de réalisation, analyse du front d'onde comprend la détermination d'une carte bidimensionnelle d'un paramètre du front d'onde, par exemple la détermination d'une carte bidimensionnelle des pentes locales du front d'onde.

Selon un ou plusieurs exemples de réalisation, le procédé d'imagerie microscopique comprend en outre la correction d'un front d'onde issu de ladite section optique de l'objet dans un plan de correction conjugué avec un plan pupillaire de l'objectif de microscope, ledit plan de correction étant positionné dans la voie d'analyse.

Selon un ou plusieurs exemples de réalisation, l'élément séparateur de faisceau est de type dichroïque, l'imagerie est réalisée dans une première bande spectrale et l'analyse est réalisée dans une deuxième bande spectrale, distincte de la première bande spectrale.

Cette mise en œuvre est par exemple rendue possible par l'introduction de deux types d'éléments fluorescents au sein de l'objet, et permet de ne pas utiliser de photons de la lumière fluorescente d'émission destinée à former l'image de l'objet pour effectuer l'analyse du front d'onde, ce qui est particulièrement critique dans le cas d'objets faiblement fluorescents comme cela est généralement le cas pour les objets biologiques.

Selon un ou plusieurs exemples de réalisation, l'illumination de l'objet comprend une première illumination pour l'excitation de fluorescence pour la voie d'imagerie, et une deuxième illumination pour l'excitation de fluorescence pour la voie d'analyse, la deuxième illumination produisant un éclairage structuré de l'objet selon un motif bidimensionnel.

Selon un ou plusieurs exemples de réalisation, le motif bidimensionnel est en forme de croix.

Selon un ou plusieurs exemples de réalisation, le diaphragme de champ est de dimensions variables et le procédé d'imagerie microscopique comprend en outre l'analyse du front d'onde pour différentes dimensions du diaphragme de champ et la détermination d'au moins un domaine d'isoplanétisme à partir des différentes analyses du front d'onde.

Selon un ou plusieurs exemples de réalisation, la position du diaphragme de champ est variable dans le plan du diaphragme de champ et le procédé d'imagerie microscopique comprend en outre l'analyse du front d'onde pour différentes positions du diaphragme de champ et la détermination d'une pluralité de domaines d'isoplanétisme à partir des différentes analyses du front d'onde.

Selon un ou plusieurs exemples de réalisation, le procédé d'imagerie microscopique comprend en outre la correction séquentielle d'un front d'onde issu de ladite section optique de l'objet en différentes zones du champ, en fonction de ladite pluralité des domaines d'isoplanétisme.

Brève description des figures

D'autres avantages et caractéristiques de l'invention apparaîtront à la lecture de la description, illustrée par les figures suivantes :

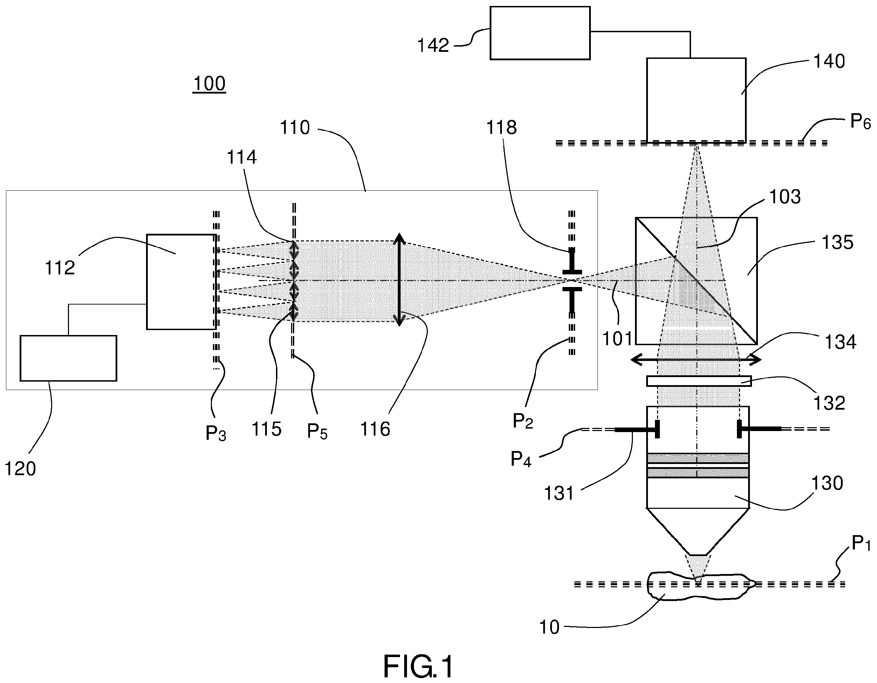

[Fig. 1] représente un schéma illustrant un exemple de dispositif d'analyse de front d'onde selon la présente description, connecté à un système d'imagerie microscopique ;

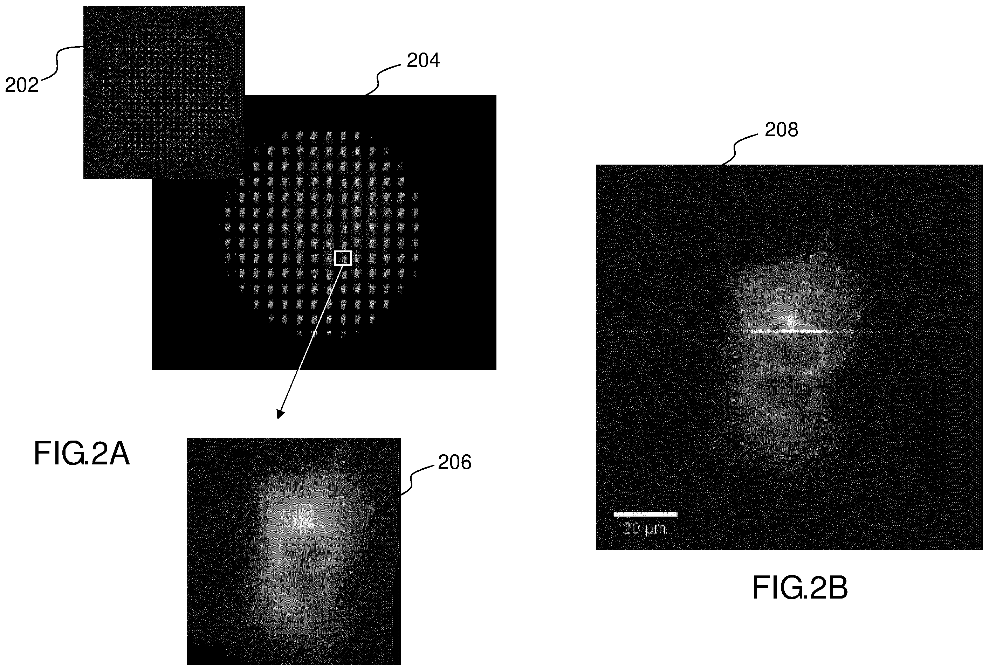

[Fig. 2A] représente des images formées par une matrice de microlentilles dans un plan de détection d'un dispositif d'analyse de front d'onde selon la présente description, selon un exemple ;

[Fig. 2B] représente une image formée sur un plan de détection d'imagerie d'un système d'imagerie, dans un système de d'imagerie microscopique selon la présente description, selon un exemple ;

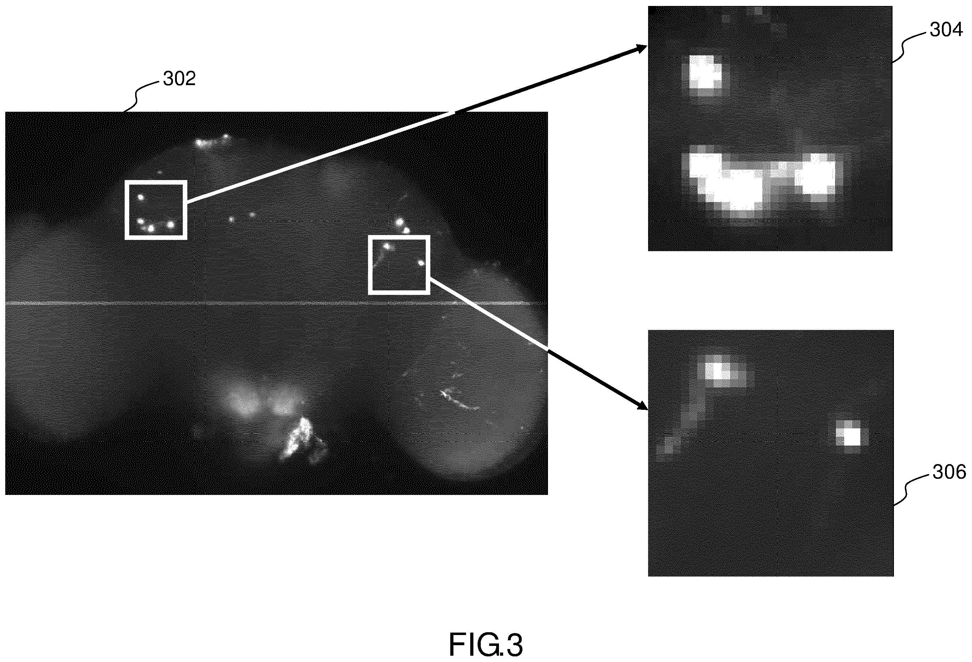

[Fig. 3] représente une image d'un objet biologique formée sur un plan de détection d'imagerie d'un système d'imagerie, ainsi que des images formées dans un plan de détection par une matrice de microlentilles d'un dispositif d'analyse de front d'onde selon un exemple de la présente description, pour deux champs d'analyse de tailles et positions différentes définies par les tailles et positions du diaphragme de champ ;

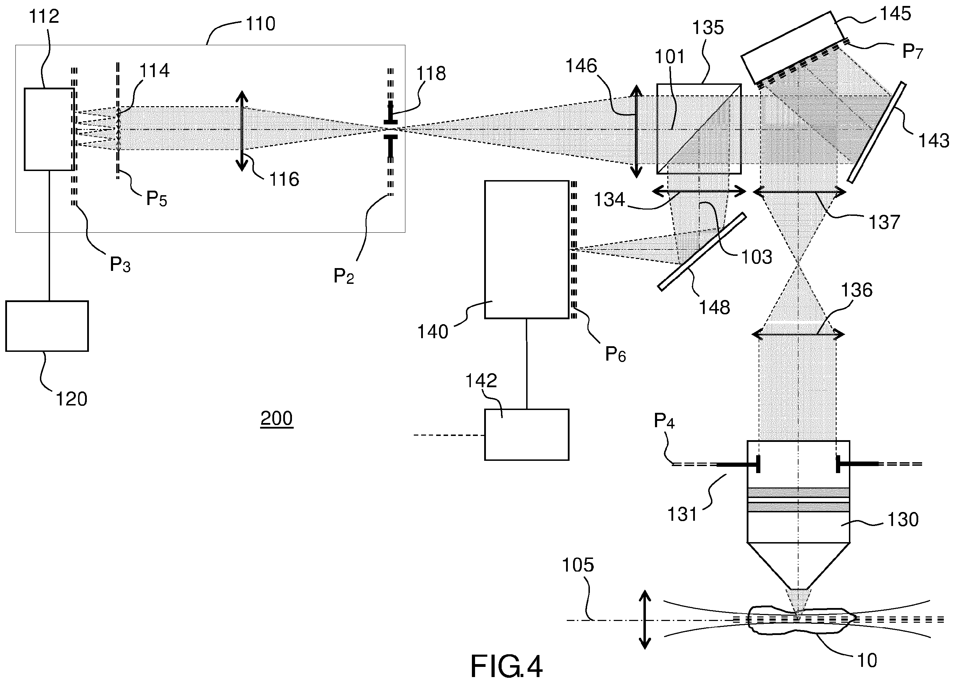

[Fig. 4] représente un schéma illustrant un exemple de système d'imagerie microscopique de fluorescence de type « feuille de lumière », selon la présente description ;

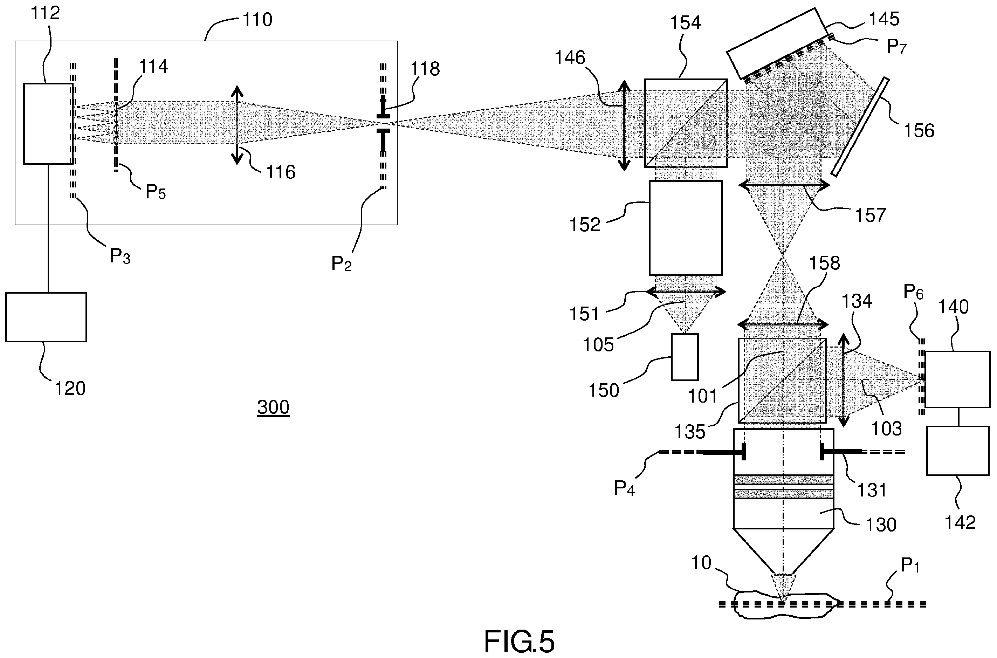

[Fig. 5] représente un schéma illustrant un exemple de système d'imagerie microscopique de fluorescence de type « multiphotonique », selon la présente description ;

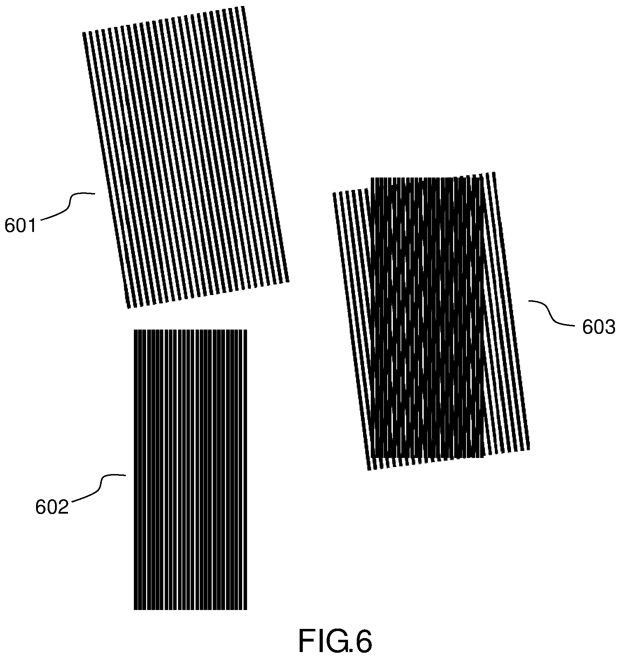

[Fig. 6] représente un schéma illustrant un exemple d'apparition de motifs d'intensité par phénomène de Moiré issu de la superposition de deux motifs d'intensité comprenant des fréquences spatiales différentes correspondant respectivement à une fréquence spatiale de microstructures d'un objet et à une fréquence spatiale de structuration du diaphragme de champ;

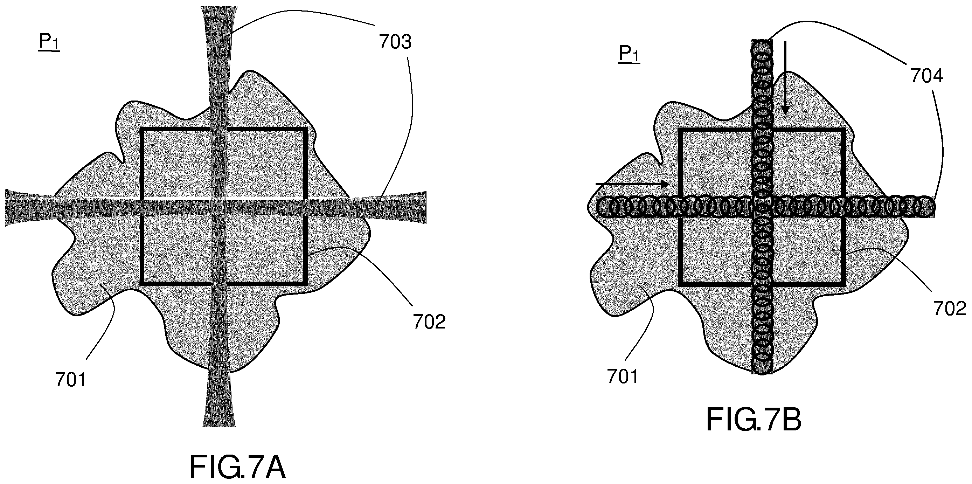

[Fig. 7A] représente un schéma illustrant un exemple d'éclairage structuré d'un objet, selon un motif bidimensionnel en forme de croix, dans un exemple de système d'imagerie microscopique de fluorescence de type « feuille de lumière » selon la présente description ;

[Fig. 7B] représente un schéma illustrant un exemple d'éclairage structuré d'un objet, selon un motif bidimensionnel en forme de croix, dans un exemple de système d'imagerie microscopique de fluorescence de type « multiphotonique » selon la présente description ;

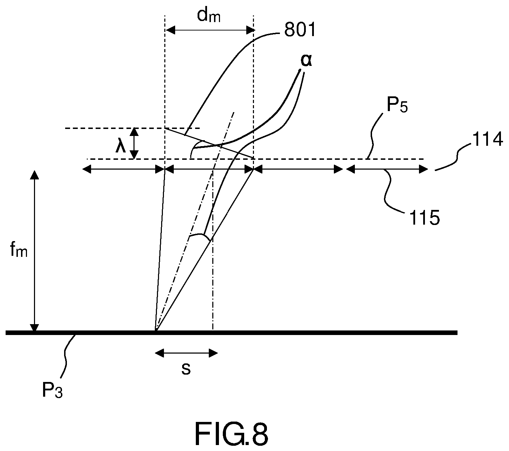

[Fig. 8] représente un schéma illustrant l'effet géométrique produit au niveau du plan de détection par un gradient de front d'onde non nul à l'échelle d'une microlentille d'une matrice de microlentilles d'un dispositif d'analyse de front d'onde, selon la présente description.

Description détaillée de l'invention

La Fig. 1 illustre schématiquement un exemple de dispositif d'analyse de front d'onde 110 selon la présente description, connecté à un système d'imagerie microscopique de fluorescence à sectionnement optique 100.

Le système d'imagerie microscopique de fluorescence à sectionnement optique 100 comprend une voie d'éclairage (non représentée sur la Fig. 1) pour l'illumination d'une section optique d'un objet volumique et fluorescent 10.

Le système d'imagerie microscopique 100 comprend également une voie d'imagerie 103 et une voie d'analyse 101 comprenant le dispositif d'analyse de front d'onde 110.

La voie d'imagerie 103 comprend dans l'exemple de la Fig. 1 un objectif de microscope 130 comprenant une pupille 131 dans un plan pupillaire $P_4$, une optique de focalisation 134, un filtre de fluorescence 132, un détecteur d'imagerie 140 comprenant un plan de détection $P_6$, une unité de traitement 142 pour le traitement des signaux acquis par le détecteur 140.

Selon le type de système d'imagerie microscopique (par exemple feuille de lumière ou multiphoton), le détecteur d'imagerie 140 peut être un détecteur bidimensionnel, par exemple une caméra CCD (Charge Coupled Device) ou une caméra CMOS (Complementary Metal Oxyde Sensor) de forte sensibilité, comme par exemple les caméras sCMOS, ou un détecteur ponctuel (par exemple un photomultiplicateur).

L'objet 10 d'intérêt est positionné au voisinage d'un plan focal $P_1$ de l'objectif de microscope 130. L'objet 10 est par exemple un échantillon transparent ou semi-transparent, comme un objet biologique fluorescent, et le plan focal $P_1$ de l'objectif de microscope 130 est par exemple localisé à une distance non nulle de la surface de l'objet 10, de manière à effectuer une image d'un plan localisé en profondeur.

Le système d'imagerie microscopique 100 est un système d'imagerie de fluorescence à sectionnement optique, c'est-à-dire un microscope permettant selon diverses techniques de sélectionner la lumière provenant uniquement d'une section optique perpendiculaire à l'axe optique de l'objectif de microscope. La section optique est située dans le plan focal de l'objectif, son épaisseur pouvant être inférieure à la profondeur de champ de l'objectif de microscope. Il existe plusieurs approches techniques permettant de réaliser une section optique au sein d'un microscope de fluorescence, comme par exemple la microscopie de fluorescence à feuille de lumière et la microscopie de fluorescence multiphotonique dont des exemples de mises en œuvre seront décrits en référence aux Figs. 4 et 5. A des fins de simplicité, la voie d'illumination de l'objet comprenant des moyens de génération d'une section optique de fluorescence ne sont pas représentés sur la Fig. 1.

Le filtre de fluorescence 132 est un filtre spectral permettant de ne sélectionner que la bande spectrale correspondant à l'émission de fluorescence, de manière à supprimer la lumière d'excitation éventuellement rétrodiffusée par l'objet. Il peut s'agir d'un filtre passe-haut, d'un filtre passe-bas ou d'un filtre passe bande, en fonction des caractéristiques spectrales relatives entre le faisceau d'excitation et le faisceau d'émission de fluorescence.

L'optique de focalisation 134 permet de former une image d'une section optique superposée au plan focal $P_1$ sur le plan de détection d'imagerie $P_6$. L'optique de focalisation 134 peut comprendre une ou plusieurs lentilles, souvent appelées « lentille(s) de tube » et dispose de caractéristiques qui, combinées aux caractéristiques du détecteur d'imagerie 140, en particulier la taille d'un détecteur élémentaire ou pixel du détecteur d'imagerie 140, permettent un échantillonnage par le détecteur 140 du plan focal $P_1$ sans effet de recouvrement de spectre, c'est-à-dire satisfaisant aux conditions d'échantillonnage correctes définies par le théorème de Shannon.

Le système d'imagerie microscopique 100 comprend également un élément séparateur de faisceau 135 permettant de prélever, sur la voie d'imagerie 103, une partie de la lumière de fluorescence émise par l'objet pour l'envoyer vers le dispositif d'analyse de front d'onde 110 de la voie d'analyse.

Selon un ou plusieurs exemples de réalisation, l'élément séparateur de faisceau 135 comprend un cube séparateur ou une lame séparatrice, permettant la transmission (ou la réflexion) d'une proportion de la lumière de fluorescence issue de l'objet vers le détecteur d'imagerie 140 et la réflexion (ou la transmission) du reste de la lumière de fluorescence issue de l'objet vers le dispositif d'analyse de front d'onde 110, cette proportion étant par exemple de 50%.

Selon un ou plusieurs exemples de réalisation, l'élément séparateur de faisceau 135 comprend une lame ou un cube dichroïque, permettant la transmission (ou la réflexion) d'une première bande spectrale de la lumière de fluorescence issue de l'objet vers le détecteur d'imagerie 140 et la réflexion (ou la transmission) d'une seconde bande spectrale de la lumière issue de l'objet vers le dispositif d'analyse de front d'onde 110, ces deux bandes spectrales ne présentant pas de recouvrement. Par exemple, l'utilisation d'un élément séparateur de faisceau de type dichroïque est réalisée de manière concomitante à l'utilisation d'une ou plusieurs sources d'excitation de fluorescence et deux types de marqueurs fluorescents au niveau de l'objet, de telle sorte à obtenir deux spectres d'émission de fluorescence distincts. On évite ainsi le prélèvement de signal utile à la formation de l'image par le détecteur d'imagerie 140 à des fins de mesure de front d'onde. Le bilan photométrique est ainsi optimal à la fois sur la voie d'imagerie 103 et sur la voie d'analyse 101. Par exemple, dans le cas d'un objet biologique comme le cerveau d'animaux modèles en neuroimagerie (drosophile, Zebra Fish), on pourra utiliser un marqueur fluorescent anatomique pour la mesure de front d'onde par le dispositif d'analyse de front d'onde 110, et un marqueur fluorescent spécifique pour l'imagerie, par exemple un marqueur de l'activité calcique associée à la réponse des neurones individuels, ces 2 marqueurs émettant un signal fluorescent suivants 2 bandes spectrales distinctes.

Le dispositif d'analyse (ou mesure) de front d'onde 110 représenté sur la fig. 1 comprend un détecteur bidimensionnel 112 avec un plan de détection $P_3$, configuré pour la détection de signaux lumineux issus d'une matrice 114 de microlentille 115, ladite matrice étant agencée dans un plan d'analyse $P_5$. Le dispositif d'analyse de front d'onde 110 comprend également un système optique relai 116 configuré pour conjuguer optiquement le plan d'analyse $P_5$ et le plan pupillaire $P_4$ de l'objectif de microscope 130, un diaphragme de champ 118 et une unité de traitement 120 pour le traitement des signaux issus du détecteur 112.

Le détecteur bidimensionnel 112 est par exemple une caméra bidimensionnelle de type CCD, ou CMOS, configuré pour détecter une lumière de fluorescence dans une bande spectrale donnée, issue de l'objet. Typiquement, il est fait usage en microscopie de fluorescence de marqueurs fluorescents émettant dans une bande spectrale visible ou proche infrarouge, par exemple entre 400 et 900 nm. Il est cependant possible d'adapter la sensibilité du détecteur à d'autres bandes spectrales si nécessaire, en utilisant d'autres technologies de détection, comme par exemple d'autres matériaux photosensibles au niveau des pixels du détecteur bidimensionnel. Par exemple, l'InGaAs est un matériau sensible entre 0,9 µm et 1,7 µm pour l'infrarouge plus lointain, gamme spectrale dans laquelle de nombreux marqueurs fluorescents sont en développement du fait de la plus grande profondeur de pénétration de la lumière en particulier dans les milieux diffusants.

La matrice de microlentilles 114 comprend un arrangement bidimensionnel d'éléments optiques de focalisation 115 agencés dans un plan d'analyse $P_5$, par exemple arrangés selon une matrice bidimensionnelle. En particulier, chaque élément optique de focalisation 115 - ou microlentille - est caractérisé par la même distance focale $f_m$, ainsi que la même taille de pupille

$d_m$, la taille de pupille étant définie en fonction de la forme des microlentilles. La matrice de microlentilles 114 peut être réalisée suivant diverses techniques, incluant de manière non exhaustive l'usinage d'un substrat constitué d'un matériau optique comme le verre, la photolithographie appliquée à une résine photosensible déposée sur un substrat optique, le dépôt itératif de matériau optique sur un substrat permettant de constituer un réseau de lentilles de Fresnel, le pressage de matériau optique plastique à l'aide d'un moule. Les microlentilles présentent typiquement une pupille de forme ronde, $d_m$ correspondant dans ce cas à son diamètre, ou de forme carrée, $d_m$ correspondant dans ce cas à son côté. D'autres géométries de pupilles sont possibles selon la technologie employée, comme par exemple des pupilles de forme hexagonale. De manière préférentielle on utilisera une matrice de microlentilles jointives de formes carrées, l'aspect jointif de cette géométrie permettant d'utiliser la totalité de la lumière incidente, au contraire de microlentilles de forme ronde, non jointives. De manière à maximiser l'efficacité de transmission, il est généralement fait usage d'un traitement antireflet correspondant à la bande spectrale d'usage de la matrice de microlentilles. La matrice de microlentilles 114 est positionnée à la distance $f_m$ par rapport au détecteur bidimensionnel 112, chaque microlentille formant une image dans le plan de détection $P_3$.

L'élément séparateur de faisceau 135 permet de définir dans le dispositif de d'analyse de front d'onde 110 un plan image intermédiaire $P_2$ conjugué du plan focal objet $P_1$. Le diaphragme de champ 118 est agencé dans le plan focal intermédiaire $P_2$. Le système optique relai 116, en combinaison avec la matrice de microlentilles 114, permet d'effectuer une conjugaison optique entre le plan $P_2$ et le plan de détection $P_3$, selon un grandissement défini par le rapport des focales du système optique relai 116 et de la matrice de microlentilles 114. Par ailleurs, le système optique relai 116, en combinaison avec l'optique de focalisation 134 (lentille de tube), permet d'effectuer une conjugaison optique entre le plan pupillaire $P_4$ de l'objectif de microscope 130 et le plan d'analyse $P_5$ (plan de la matrice de microlentilles), selon un grandissement défini par le rapport des focales du système optique relai 116 et de l'optique de focalisation 134.

Le diaphragme de champ 118, localisé dans le plan image intermédiaire $P_2$, permet de limiter la taille du champ imagé par chaque microlentille 115 de la matrice de microlentille 114. Selon une mise en œuvre avantageuse les dimensions et la géométrie du diaphragme de champ 118 sont choisies telles qu'aucun recouvrement n'est possible entre 2 images adjacentes issues de microlentilles adjacentes de la matrice de microlentilles 114. Par exemple, pour des microlentilles de forme carrée, de côté $d_m$, et un système optique relai 116 de focale $f_c=3f_m$, on peut définir un diaphragme de champ 118 de forme carrée et de côté inférieur ou égal à 3 $d_m$. Le diaphragme de champ fait partie du dispositif d'analyse de front d'onde 110 et donc de la voie d'analyse 101 mais il ne fait pas partie de la voie d'imagerie 105 de manière à ne pas minimiser le champ imagé par le détecteur d'imagerie 140.

L'unité de traitement 120 est configurée pour traiter les signaux issus du détecteur 112, et effectuer notamment toutes opérations sur ces signaux pour effectuer une mesure du front d'onde issu d'une section optique de l'objet, c'est-à-dire déterminer un paramètre caractéristique du front d'onde.

L'unité de traitement 120 est de manière générale configurée pour la mise en œuvre d'étapes de calcul et/ou de traitement mises en œuvre dans des procédés selon la présente demande. De façon générale, lorsque dans la présente description, il est fait référence à des étapes de calcul ou traitement pour la mise en œuvre notamment d'étapes de procédés, il est entendu que chaque étape de calcul ou traitement peut être mis en œuvre par logiciel, hardware, firmware, microcode ou toute combinaison appropriée de ces technologies. Lorsqu'un logiciel est utilisé, chaque étape de calcul ou traitement peut être mise en œuvre par des instructions de programme d'ordinateur ou du code logiciel. Ces instructions peuvent être stockées ou transmises vers un support de stockage lisible par un ordinateur (ou unité de traitement) et/ou être exécutées par un ordinateur (ou unité de traitement) afin de mettre en œuvre ces étapes de calcul ou traitement.

Bien entendu, l'unité de traitement 120 et l'unité de traitement 140 peuvent être regroupées au sein d'une même unité, par exemple un ordinateur.

Chaque microlentille 115 de la matrice de microlentilles 114 forme ainsi une image sur le plan de détection $P_3$ du détecteur 112 d'une section optique d'un fluorescent, selon un champ défini par le diaphragme de champ 118 tel que décrit précédemment. Lorsque l'objet et/ou le système optique d'imagerie ne présente aucune aberration, chaque microlentille forme au niveau du plan de détection une image d'une section optique de l'objet centrée sur l'axe optique de la microlentille en question. Lorsque le plan $P_1$ est localisé en profondeur d'un objet hétérogène, des aberrations optiques sont présentes notamment dans la pupille 131, correspondant à un front d'onde non plan. Dans ce cas on observe un décalage transverse de chaque image formée par chaque microlentille de la matrice 115 sur le plan de détection $P_3$, ce décalage étant proportionnel à la dérivée locale du front d'onde au niveau de la microlentille correspondante, c'est-à-dire à la pente du front d'onde. Puisque les plans $P_5$ et $P_4$ sont conjugués, chacune de ces images correspond à l'image formée par le détecteur 140 de la voie d'imagerie 103 mais au travers d'une partie de la pupille 131, partie correspondant à l'image d'une microlentille de la matrice $P_3$ par les optiques 116 et 134. Ce décalage peut être vu de manière similaire à un analyseur de front d'onde de Shack-Hartmann, pour lequel on observe le décalage d'une tache de diffraction issue de chaque microlentille et non d'une image, ce type de capteur étant utilisé avec une source ponctuelle.

L'effet géométrique produit au niveau du plan de détection d'un système d'analyse de front d'onde par un front d'onde non parfait à l'échelle d'une microlentille 115 de la matrice de microlentilles 114 ainsi qu'un exemple de dimensionnement avantageux des microlentilles seront décrits plus en détails en référence à la FIG. 8.

A titre d'illustration, la Fig. 2A représente une image 202 montrant les taches de diffraction formées par une matrice de microlentilles dans un analyseur de front d'onde de type Shack-Hartmann et une image 204 montrant les images formées par les microlentilles d'une matrice de microlentilles dans un analyseur de front d'onde selon la présente description. L'image 206 illustre une image formée par une microlentille agrandie. La Fig. 2B représente l'image du même objet formé sur le détecteur de la voie d'imagerie. Dans ces exemples, l'objet est une cellule fluorescente de type HeLa incluant un marqueur fluorescent de la tubuline et le système d'imagerie est de type feuille de lumière. Dans cet exemple les microlentilles sont jointives et de forme carrée et présentent un rapport entre leur distance focale et leur côté de 15, ce qui correspond à une ouverture numérique sensiblement inférieure à celle de l'objectif de microscope, ce qui explique la perte de résolution des images formées par les microlentilles, dont l'image 206 est un exemple. De ce fait les images formées par les microlentilles effectuent un filtrage passe-bas des fréquences spatiales de l'objet par comparaison à l'image formée sur le détecteur de la voie d'imagerie. Dans cet exemple, la surface du champ d'analyse défini par le diaphragme de champ correspond environ à un quart de la surface du champ imagé par le microscope.

La mesure de l'ensemble des décalages des images formées par l'ensemble des microlentilles permet de déduire, à l'aide de l'unité de traitement 120, une carte bidimensionnelle de pentes du front d'onde dans le plan pupillaire $P_4$. Par intégration, il est possible d'en déduire une carte du front d'onde. La mesure des décalages des images formées par les microlentilles est typiquement effectuée par des opérations d'intercorrélation de chaque image par rapport à une image de référence. Cette image de référence est par exemple définie comme l'image formée par une microlentille de référence, par exemple une microlentille centrale de la matrice de microlentilles 114. En limitant le champ imagé par chaque microlentille au niveau du plan de détection $P_3$, le diaphragme de champ 118 évite le recouvrement d'images issues de microlentilles adjacentes susceptibles d'introduire des erreurs lors du calcul d'intercorrélation.

Le dispositif d'analyse de front d'onde 110, lorsqu'il est mis en œuvre au sein d'un microscope de fluorescence à sectionnement optique tel qu'illustré par exemple sur la Fig. 1, permet de réaliser une mesure de front sans nécessiter la présence d'une source ponctuelle au sein de l'objet tel que cela est généralement le cas, par exemple avec l'usage d'un analyseur de front d'onde de type Shack-Hartmann.

Lorsqu'il est mis en œuvre au sein d'un microscope de fluorescence à sectionnement optique, le dispositif d'analyse de front d'onde 110 permet de réaliser une mesure des défauts optiques sur un champ d'analyse défini par le diaphragme de champ 118. Lorsque le champ d'analyse est de dimensions similaires ou inférieures à un domaine d'isoplanétisme, la mesure de front d'onde est valide quel que soit le point du champ. Lorsque le champ d'analyse est de dimensions supérieures à un domaine d'isoplanétisme, la mesure de front d'onde correspond à la mesure d'un front d'onde moyen sur le champ défini par le diaphragme 118.

Selon un ou plusieurs exemples de réalisations, le diaphragme de champ 118 est dit « actif », c'est-à-dire que ses dimensions et/ou sa position dans le plan $P_2$ sont variables.

Ainsi, le diaphragme de champ peut, selon un exemple, présenter des dimensions variables. Par exemple, pour un diaphragme de champ en transmission de forme carrée formé de 4 lames opaques arrangées en regard 2 à 2 de manière à former une zone transparente de forme carrée, il est possible de disposer ces lames sur des éléments mobiles, motorisés ou non, permettant d'ajuster la distance relative entre 2 lames situées en regard l'une de l'autre. Une ouverture variable du diaphragme de champ permet de déterminer un domaine d'isoplanétisme d'un objet, dans une zone du champ d'imagerie, par exemple en effectuant une succession de mesures de front d'onde pour une taille régulièrement décroissante du diaphragme de champ. Lorsque le front d'onde entre 2 mesures successives cesse de varier, la taille du diaphragme de champ correspondant à la première des 2 mesures correspond à la taille du domaine d'isoplanétisme de l'objet dans la zone considérée.

Le diaphragme de champ 118 peut également, selon un exemple, présenter une position variable dans le plan $P_2$. Par exemple, la position variable est obtenue par motorisation de la position transverse, par exemple au moyen de moteurs piézoélectriques ou de moteurs pas-à-pas.

En combinant une position variable du diaphragme de champ 118 avec des dimensions variables, il est possible de déterminer les dimensions du domaine d'isoplanétisme en différentes zones du champ et de déterminer les défauts optiques du front d'onde dans le plan d'analyse, pour les différentes zones du champ d'imagerie. On choisit avantageusement des dimensions du diaphragme de champ 118 inférieures à celles du domaine d'isoplanétisme déterminé en chacune des zones.

La Fig. 3 représente ainsi une image 302 d'un objet biologique formée sur un plan de détection d'imagerie $P_6$ d'un système d'imagerie, ainsi que des images 304, 306, formées dans le plan de détection $P_3$ d'un dispositif d'analyse de front d'onde selon un exemple de la présente description, par une matrice de microlentilles, pour deux champs d'analyse de tailles et positions différentes définies par les tailles et positions du diaphragme de champ.

Pour des objets biologiques en neuroimagerie (cerveau de drosophile, de souris, de Zebra Fish), le champ d'imagerie typique est de 400 µm à 500µm de côté. Un domaine d'isoplanétisme « moyen » correspondant est d'environ 150µm de côté (référence disponible si besoin).

La Fig. 4 représente un schéma illustrant un exemple de système d'imagerie microscopique de fluorescence 200 de type « feuille de lumière », selon la présente description.

Le système d'imagerie microscopique de fluorescence 200 comprend des éléments similaires à ceux décrits en référence à la Fig. 1, référencés sur la Fig. 4 avec des références identiques, et non repris ici pour ne pas alourdir la description.

En microscopie de fluorescence à feuille de lumière, La voie d'éclairage 105 est configurée pour former une section optique par illumination transverse de l'objet. La voie d'éclairage peut comprendre une ou plusieurs sources lumineuses (non représentées sur la Fig. 4, pour l'émission d'un ou plusieurs faisceaux d'excitation, pouvant émettre dans des bandes spectrales différentes. Un faisceau d'excitation de fluorescence forme un plan lumineux fin, généralement d'épaisseur sensiblement similaire à la profondeur de champ de l'objectif de microscope, et incident au niveau de l'objet selon une direction perpendiculaire à l'axe optique de l'objectif de microscope. Le faisceau d'excitation ne traverse pas l'échantillon en dehors du plan focal $P_1$ de l'objectif 130, évitant ainsi l'émission de signal de fluorescence parasite.

Dans l'exemple illustré sur la Fig. 4, le système d'imagerie microscopique de fluorescence de type « feuille de lumière » comprend un dispositif de correction 145 avec un plan de correction $P_7$ commun à la voie d'analyse 101 et à la voie d'imagerie 103. La correction du front d'onde au moyen du dispositif de correction permet d'améliorer la qualité de l'image formée sur le plan de détection $P_6$ du détecteur 140, en particulier lorsque le plan focal de l'objectif de microscope est situé en profondeur de l'objet, grâce à la compensation des défauts optiques induits par les inhomogénéités de l'objet entre sa surface et ledit plan focal.

Le système d'imagerie microscopique 200 illustré sur la Fig. 4 comprend en outre, sur la partie commune des voies d'analyse et d'imagerie, un système optique afocal 136, 137. Il comprend par ailleurs, sur la voie d'imagerie 103, la lentille de tube 134 permettant de former l'image sur le plan de détection d'imagerie $P_6$, et, sur la voie d'analyse 101, une lentille 146 pour former le plan image intermédiaire $P_2$ dans lequel est agencé le diaphragme de champ 118 du dispositif d'analyse de front d'onde 110.

La Fig. 5 représente un schéma illustrant un exemple de système d'imagerie microscopique de fluorescence 300 de type « multiphotonique », selon la présente description.

Le système d'imagerie microscopique de fluorescence 300 comprend des éléments similaires à ceux décrits en référence à la Fig. 1, référencés sur la Fig. 5 avec des références identiques, et non repris ici pour ne pas alourdir la description.

En microscopie de fluorescence multiphotonique, on utilise une émission de fluorescence caractérisée par une relation non-linéaire vis-à-vis du faisceau d'excitation : le signal de fluorescence d'intérêt n'est émis que lorsqu'une densité de puissance minimale est localement atteinte. Cette condition est typiquement réalisée uniquement lorsque le faisceau d'excitation est focalisé, à savoir dans le plan de focalisation de l'objectif de microscope, ce qui empêche intrinsèquement l'émission d'un signal de fluorescence parasite.

Ainsi, dans l'exemple illustré que la Fig. 5, la voie d'éclairage 105 comprend une ou plusieurs sources laser 150 pour l'émission d'impulsions ultra brèves, avec optionnellement une ou plusieurs optiques de collection 151, l'objectif de microscope 130 permettant de focaliser chaque impulsion en un point de focalisation du plan focal $P_1$ de l'objectif pour former une émission de fluorescence multiphotonique. La voie d'éclairage 105 comprend en outre un dispositif de balayage 152 configuré pour un balayage transverse du point de focalisation dans le plan focal $P_1$. Dans l'exemple du système d'imagerie microscopique illustré sur la Fig. 5, le détecteur 140 comprend par exemple un détecteur monodimensionnel, par exemple un photomultiplicateur, configuré pour détecter l'énergie lumineuse émises par l'objet 10 et envoyée par l'élément séparateur 135 pour chaque position du point de focalisation. Ainsi, le détecteur 140 coopère avec le dispositif de balayage 152 pour former une image de l'objet à deux dimensions.

Selon un ou plusieurs exemples de réalisation, le système d'imagerie microscopique de fluorescence multiphotonique 300 comprend un dispositif de correction 145 avec un plan de correction $P_7$. Dans cet exemple, le plan de correction $P_7$ est commun à la voie d'analyse 101 et à la voie d'éclairage 105. La correction du front d'onde au moyen du dispositif de correction permet d'améliorer la qualité de la focalisation dans l'objet, et par voie de conséquence le signal de fluorescence en chaque point de l'image, grâce à la compensation des défauts optiques induits par les inhomogénéités de l'objet entre sa surface et ledit plan focal à la traversée de chaque impulsion.

Le système d'imagerie microscopique 300 illustré sur la Fig. 5 comprend en outre, sur la partie commune des voies d'analyse et d'éclairage, un système optique afocal 157, 158. Il comprend par ailleurs, sur la voie d'imagerie 103, la lentille de tube 134 permettant de former l'image sur le plan de détection d'imagerie $P_6$, et, sur la voie d'analyse 101, une lentille 146 pour former le plan image intermédiaire $P_2$ dans lequel est agencé le diaphragme de champ 118 du dispositif d'analyse de front d'onde 110.

Quel que soit le système d'imagerie microscopique de fluorescence à sectionnement optique mis en œuvre dans la présente description, la déposante a montré que l'utilisation de calculs d'intercorrélation pour déterminer les positions relatives des images formées par les microlentilles entraîne une dépendance de la précision de mesure de ces positions relatives à certaines caractéristiques desdites images, en particulier la taille et le contraste des motifs d'intensité constituant ces images.

En effet, à titre d'exemple, un ensemble d'images uniformes formées par les microlentilles ne permet pas d'effectuer un calcul d'intercorrélation précis, l'opération de corrélation ne disposant d'aucune structure permettant de former un pic de corrélation dont la position peut être déterminée avec précision. Ce cas de figure peut par exemple se présenter pour un objet homogène, ou encore pour un objet constitué uniquement de détails dont les tailles caractéristiques sont inférieures à la taille minimale pouvant être imagée par les microlentilles de la matrice de microlentilles.

Les Fig. 6 et Fig. 7 illustrent deux exemples de mis en œuvre d'un procédé d'imagerie microscopique selon la présente description permettant d'améliorer le traitement des images formées dans le plan de détection $P_3$ du dispositif d'analyse de front d'onde 110 selon la présente description.

La Fig. 6 illustre un premier exemple dans lequel le diaphragme de champ 118 est structuré. Par exemple, le diaphragme de champ est un diaphragme de champ en transmission et la transmission est structurée, selon une direction, pour former une alternance régulière avec une fréquence spatiale donnée de zones de transmission et de zones opaques. Selon un autre exemple, le diaphragme de champ est un diaphragme de champ en réflexion et la réflexion est structurée, selon une direction, pour former une alternance régulière avec une fréquence spatiale donnée de zones réfléchissantes et de zones non réfléchissantes.

Ainsi, l'image 602 sur la Fig. 6 représente un exemple de transmission structurée d'un diaphragme de champ selon une alternance régulière de zones transparentes et de zones opaques selon une direction, définissant une fréquence spatiale $k_0$.

L'image 601 représente une image, dans le plan du diaphragme de champ ($P_2$, Fig. 1), d'un un objet fluorescent théorique qui serait constitué d'une alternance régulière de structures fluorescentes et de structures non fluorescentes selon une direction, avec une fréquence spatiale k.

L'image 603 montre la superposition des deux motifs d'intensité 601 et 602. Lorsque les deux motifs d'intensité périodiques et de fréquences spatiales différentes se superposent dans le plan du diaphragme de champ, il en résulte un phénomène de Moiré visible dans un plan conjugué dudit plan du diaphragme de champ. Come montré sur l'image 603, le phénomène de Moiré fait apparaître un motif périodique supplémentaire au sein d'un plan conjugué du plan du diaphragme de champ, motif supplémentaire dont la fréquence spatiale correspond à la différence vectorielle des deux fréquences spatiales des motifs initiaux, soit une fréquence spatiale sensiblement inférieure aux fréquences spatiales des deux motifs initiaux.

En pratique, pour un objet quelconque, le contenu en fréquences spatiales de l'image d'un plan de l'objet est complexe et constitué d'une multitude de fréquences spatiales. Certains objets microscopiques complexes, en particulier des objets biologiques tels que par exemple des réseaux de microtubules, peuvent être constitués uniquement de structures de tailles caractéristiques très petites, et donc de fréquences spatiales très élevées. Le dispositif d'analyse de front d'onde tel que décrit dans la présente description réalise dans le plan de détection un ensemble d'images conjuguées du plan du diaphragme de champ, en particulier au travers d'une matrice de microlentilles. Cette matrice de microlentilles est constituée de microlentilles individuelles dont l'ouverture numérique est sensiblement inférieure à l'ouverture numérique de l'objectif de microscope, de manière à réaliser un compromis entre le champ imagé par chaque microlentille et la sensibilité de mesure de déplacement des images réalisées par les microlentilles par calcul d'intercorrélation. Il en résulte des images du plan du diaphragme de champ réalisées par les microlentilles dont le contenu en fréquences spatiale est sensiblement réduit au niveau des fréquences spatiales hautes, de manière directement proportionnelle à l'ouverture numérique des microlentilles. Ainsi, pour des objets tels que précédemment décrits, il est possible que les images réalisées par les microlentilles ne contiennent plus suffisamment de détails pour obtenir des calculs d'intercorrélation précis. Dans ce cas, en positionnant un diaphragme de champ structuré, par exemple selon un motif tel qu'illustré en 602, les images produites par les microlentilles font apparaître un motif d'intensité supplémentaire suivant un phénomène de Moiré tel qu'illustré selon un exemple sur l'image 603, dont au moins une fréquence spatiale est susceptible d'être transmise dans le plan de détection $P_3$. Ce motif supplémentaire, caractéristique de l'objet, permet avantageusement d'effectuer un calcul d'intercorrélation sensiblement plus précis qu'en l'absence de tout motif de Moiré, en particulier pour des objets tels que précédemment décrits.

Lorsque l'image de l'objet ne correspond pas à un motif d'intensité définissant une fréquence spatiale unique telle que représenté par la Fig. 6 selon 601, le motif d'intensité supplémentaire créé par phénomène de Moiré est un motif plus complexe que l'exemple représenté sur l'image 603.

Par exemple, on pourra choisir un motif de transmission (ou de réflexion) du diaphragme de champ avec une fréquence spatiale déterminée pour que le motif de Moiré résultant (image 603) présente une fréquence inférieure à une fréquence spatiale maximale $F_{max}$ transmise par les microlentilles. Il est ainsi possible d'améliorer la précision de mesure de front d'onde pour des objets dont la majorité des fréquences spatiales sont comprises entre la fréquence spatiale maximale transmise par les microlentilles et deux fois cette fréquence spatiale maximale. Pour des microlentilles carrées, de côté $d_m$, de focale $f_m$, et pour une longueur d'onde centrale d'imagerie $\lambda$, cette fréquence spatiale maximale $F_{max}$ est donnée par $F_{max} = d_m / \lambda f_m$.

Les Fig. 7A et 7B illustrent un deuxième exemple dans lequel une illumination de l'objet est structurée. La Fig. 7A décrit une illumination structurée dans un système d'imagerie selon la présente description, de type feuille de lumière et La Fig. 7B décrit une illumination structurée dans un système d'imagerie selon la présente description, de type multiphotonique.

La Fig. 7A représente un schéma illustrant un exemple d'une représentation de face, c'est-à-dire perpendiculairement à l'axe optique, d'une section optique 701 d'un objet dans le plan focal $P_1$ d'un objectif de microscope d'un système d'imagerie microscopique de fluorescence à sectionnement optique de type « feuille de lumière », tel qu'illustré par exemple sur la Fig. 4.

La surface 702 représente schématiquement le champ d'analyse dont la taille est définie par le diaphragme de champ d'un dispositif d'analyse de front d'onde selon la présente description. Comme exposé précédemment, lorsque le champ d'analyse 702 correspond à une zone homogène en intensité de fluorescence émise par l'objet, il est difficile d'obtenir un calcul d'intercorrélation précis entre les images produites par les microlentilles du dispositif d'analyse de front d'onde pour déterminer les positions relatives desdites images, une intercorrélation entre deux motifs d'intensité homogène ne résultant pas en un pic de corrélation localisable spatialement avec précision. La déposante a montré que l'on pouvait alors utiliser de manière avantageuse un éclairage structuré de l'objet au niveau de la section optique permettant d'obtenir un ensemble d'images formées par les microlentilles pour lesquelles le motif d'intensité à l'éclairage est présent et permet la réalisation d'un calcul d'intercorrélation définissant un pic de corrélation bidimensionnel.

Selon l'exemple de la Fig. 7A, correspondant à une mise en œuvre simplifiée, on utilise au moins une source supplémentaire au niveau de la voie d'éclairage 105 de type « feuille de lumière », configurée pour éclairer l'objet selon deux faisceaux 703, disposés par exemple selon 2 directions perpendiculaires et dont le point d'intersection est situé dans la surface 702. Tout autre motif d'éclairage comprenant au moins deux directions non parallèles répond au besoin de structuration de l'éclairage tel que présenté. De manière avantageuse, la source supplémentaire effectue un éclairage selon une bande spectrale spécifique permettant l'émission de fluorescence d'une bande spectrale spécifique différente de l'émission de fluorescence produite par l'éclairage par la première source, ce qui, combiné à l'usage d'un séparateur de faisceau dichroïque entre la voie d'imagerie et le dispositif d'analyse de front d'onde, permet de ne pas utiliser de lumière destinée à la voie d'imagerie pour l'analyse du front d'onde et ainsi maximiser le contraste des images formées par les microlentilles.

La Fig. 7B représente un schéma illustrant un exemple d'une représentation de face, c'est-à-dire perpendiculairement à l'axe optique, d'une section optique 701 d'un objet dans le plan focal $P_1$ d'un objectif de microscope d'un système d'imagerie microscopique de fluorescence à sectionnement optique de type « multiphotonique », tel que par exemple illustré par la Fig. 5.

La surface 702 représente là encore le champ d'analyse dont la taille est définie par le diaphragme de champ d'un dispositif d'analyse de front d'onde selon la présente invention. Comme exposé précédemment, lorsque le champ d'analyse 702 correspond à une zone homogène en intensité de fluorescence émise par l'objet, il n'est pas possible d'utiliser un calcul d'intercorrélation entre les images produites par les microlentilles du dispositif d'analyse de front d'onde pour déterminer les positions relatives desdites images, une intercorrélation entre deux motifs d'intensité homogène ne résultant pas en un pic de corrélation localisable spatialement avec précision. La déposante a montré que dans ce type de système d'imagerie microscopique, on pouvait également utiliser un éclairage structuré de l'objet au niveau de la section optique pour obtenir un ensemble d'images formées par les microlentilles pour lesquelles le motif d'intensité à l'éclairage est présent et permet la réalisation d'un calcul d'intercorrélation définissant un pic de corrélation bidimensionnel.

Selon l'exemple de la Fig. 7B, correspondant à une mise en œuvre simplifiée, on utilise au moins une source supplémentaire au niveau de la voie d'éclairage de type « multiphotonique », configurée pour éclairer l'objet selon un motif 704 comprenant dans cet exemple deux directions perpendiculaires et dont le point d'intersection est situé dans la surface 702. De manière pratique, pour un microscope de type « multiphotonique », ce motif est réalisé par balayage séquentiel du point de focalisation de la source supplémentaire dans le plan focal de l'objectif, typiquement à l'aide d'une paire de galvanomètres. Tout autre motif d'éclairage comprenant au moins deux directions non parallèles répond au besoin de structuration de l'éclairage tel que présenté. De manière avantageuse, la source supplémentaire effectue un éclairage selon une bande spectrale spécifique permettant l'émission de fluorescence d'une bande spectrale spécifique différente de l'émission de fluorescence produite par l'éclairage par la première source, ce qui, combiné à l'usage d'un séparateur de faisceau dichroïque entre la voie d'imagerie et le dispositif d'analyse de front d'onde, permet de ne pas utiliser de lumière destinée à la voie d'imagerie pour l'analyse du front d'onde et ainsi maximiser le contraste des images formées par les microlentilles.

La Fig. 8 représente un schéma illustrant l'effet géométrique produit au niveau du plan de détection d'un système d'analyse de front d'onde tel que décrit par la présente invention par un front d'onde non parfait à l'échelle d'une microlentille 115 de la matrice de microlentilles.

Supposons par exemple une matrice de microlentilles 114 comprenant un ensemble de microlentilles adjacentes de pupilles carrées de côté $d_m$ et de focale $f_m$ telles que représentées sur la Fig. 8 en une dimension, à des fins de simplicité. Supposons un front d'onde complexe 801 incident dans le plan d'analyse $P_5$ correspondant au plan des microlentilles, tel qu'au niveau d'une microlentille l'écart du front d'onde à un front d'onde plan parfait correspond à une longueur d'onde $\lambda$ du faisceau incident, tel que représenté sur la Fig. 8.

Pour un dispositif d'analyse du front d'onde tel que décrit dans la présente description, la résolution spatiale d'analyse du front d'onde correspond à une microlentille. Le front d'onde local mesurable par une microlentille correspond ainsi à un front d'onde élémentaire formant un angle $\alpha$ avec le plan d'analyse tel que $\alpha = \delta / d_m$, $\delta$ étant l'écart local du front d'onde à un front d'onde de référence, dans cet exemple un front d'onde plan. Ainsi, pour un écart local du front d'onde à un front d'onde plan valant $\delta = \lambda$, l'angle $\alpha$ vaut $\alpha = \lambda / d_m$, $\lambda$ étant significativement plus faible que $d_m$. La tache de diffraction formée au foyer de la microlentille au niveau du plan de détection $P_3$ est ainsi décalée transversalement d'une distance s, le décalage s étant donné par :

$$ s = \frac{\lambda f}{d} $$

Pour une microlentille 115, la taille $t$ d'une tache de diffraction mesurée entre les deux premiers minima d'intensité situés de part et d'autre du maximum d'intensité, est donnée par :

$$ t = \frac{2\lambda f}{d} $$

Il est connu de l'état de l'art que, pour un détecteur bidimensionnel, par exemple une caméra, composé d'un arrangement bidimensionnel de détecteurs élémentaires ou pixels, il est possible de mesurer la position d'un motif d'intensité tel qu'une tache de diffraction ou une figure complexe avec une précision de localisation allant jusqu'au centième de pixel pour des motifs d'intensité de fort contraste et correctement échantillonnés par le détecteur. Dans le cas du dispositif d'analyse de front d'onde selon la présente description, lorsque que le détecteur bidimensionnel est dimensionné de manière telle qu'une tache de diffraction correspond à deux pixels selon une direction, et pour une précision de localisation d'un motif d'intensité d'un centième de pixel, il est ainsi possible de mesurer l'écart d'un front d'onde incident sur une microlentille avec une précision maximale de $\lambda/100$. De manière similaire, lorsque que le détecteur bidimensionnel est dimensionné de manière telle qu'une tache de diffraction correspond à deux dixièmes de pixel selon une direction, et pour une précision de localisation d'un motif d'intensité d'un centième de pixel, il est ainsi possible de mesurer l'écart d'un front d'onde incident sur une microlentille avec une précision maximale de $\lambda/10$. En pratique, la mesure d'un front d'onde avec une précision inférieure à $\lambda/10$ ne permet pas d'exploiter ladite mesure à des fins de caractérisation d'un objet ou d'imagerie de manière efficace.

Ainsi, la déposante a montré que de manière avantageuse, le dispositif d'analyse de front d'onde selon la présente invention pourra être dimensionné tel qu'une tache de diffraction d'une microlentille de la matrice de microlentille présente une dimension, selon une direction, comprise entre 0,2 et 2 fois la taille d'un pixel du détecteur bidimensionnel dans le plan de détection.

Bien que décrite à travers un certain nombre d'exemples de réalisation, le dispositif d'analyse de front d'onde et les systèmes et procédés d'imagerie microscopique utilisant le dispositif d'analyse de front d'onde comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

REFERENCES BIBLIOGRAPHIQUES

1. M. J. Booth et al. « Adaptive optics for fluorescence microscopy », extrait de l'ouvrage « Fluorescence Microscopy : Super-resolution and other Novel Techniques », A. Cornea et al., Academic Press, 2014.

2. N. Ji « Adaptive optical fluorescence microscopy », Nature Methods 14, 374-380, 2017.

3. Azucena et al. Brevet US855730 B2

4. Betzig et al. Demande de brevet publiée US 2015/0362713

5. K. Lawrence et al. « Scene-based Shack-Hartmann wavefront sensor for light-sheet microscopy », Proc. SPIE 10502, Adaptive Optics and Wavefront Control for Biological Systems IV, 2018

6. R. Jorand et al. "Deep and Clear Optical Imaging of Thick Inhomogeneous Samples", PLOS ONE, vol. 7, no. 4, 25 avril 2012

7. H. Masayuki et al. "The development of an adaptive optics system and its application to biological microscope" Proceedings of SPIE, SPIE, US, vol. 10021, 31 octobre 2016

**Revendications**

**1.** Système d'imagerie microscopique (100) de fluorescence à sectionnement optique d'un objet volumique et fluorescent (10) comprenant :

- une voie d'éclairage (105) de l'objet ;
- une voie d'imagerie (103) d'une section optique de l'objet, comprenant un objectif de microscope (130) avec une pupille dans un plan pupillaire ($P_4$) et un détecteur d'imagerie (140) comprenant un plan de détection d'imagerie ($P_6$), ladite section optique étant superposée à un plan focal ($P_1$) dudit objectif de microscope;
- une voie d'analyse (101) comprenant ledit objectif de microscope et un dispositif d'analyse d'un front d'onde (110) configuré pour l'analyse d'un front d'onde issu de l'objet;
- un élément séparateur de faisceaux (135) permettant de séparer la voie d'analyse et la voie d'imagerie ; le dispositif d'analyse comprenant :

  - un détecteur bidimensionnel (112) comprenant un plan de détection ($P_3$) conjugué avec ledit plan focal ($P_1$) de l'objectif de microscope;
  - un arrangement bidimensionnel (114) de microlentilles (115), agencé dans un plan d'analyse ($P_5$), chaque microlentille étant configurée pour former sur le plan de détection ($P_3$) une image de l'objet situé dans le plan focal ($P_1$) de l'objectif de microscope, avec un champ d'analyse donné;
  - un système optique relai (116) configuré pour conjuguer optiquement le plan d'analyse et le plan pupillaire ($P_4$);
  - une unité de traitement (120) configurée pour déterminer à partir de l'ensemble des images formées par les microlentilles une carte bidimensionnelle d'un paramètre caractéristique du front d'onde dans ledit plan d'analyse, dans lequel :

    - le paramètre caractéristique du front d'onde comprend une pente locale selon deux dimensions du front d'onde dans le plan d'analyse ; et
    - la détermination de ladite carte bidimensionnelle comprend la détermination de variations des positions des images formées par les microlentilles, la variation de position d'une image formée par une microlentille étant mesurée par rapport à une position de référence d'une image de référence, la variation de position étant déterminée par une opération d'intercorrélation entre ladite image et ladite image de référence ;

le système d'imagerie microscopique étant **caractérisé en ce que** :

  - le dispositif d'analyse de front d'onde comprend un diaphragme de champ (118) positionné dans un plan ($P_2$) conjugué optiquement avec le plan de détection ($P_3$) du dispositif d'analyse, et configuré pour définir ledit champ d'analyse ; et **en ce que**
  - la voie d'éclairage est configurée pour une première illumination de l'objet pour l'excitation de fluorescence pour la voie d'imagerie, et une deuxième illumination de l'objet pour l'excitation de fluorescence pour la voie d'analyse, la deuxième illumination produisant un éclairage structuré de l'objet selon un motif bidimensionnel en forme de croix.

2. Système d'imagerie microscopique selon la revendication 1, dans lequel lesdites microlentilles (115) présentent une pupille carrée et sont jointives.

3. Système d'imagerie microscopique selon l'une quelconque des revendications précédentes, dans lequel les microlentilles présentent une pupille de forme donnée, le diaphragme de champ (118) comprenant une forme identique à la forme de ladite pupille des microlentilles.

4. Système d'imagerie microscopique selon la revendication 3, comprenant en outre un ou plusieurs élément(s) optique(s) permettant d'effectuer la conjugaison optique entre le plan du diaphragme de champ et le plan de détection et dans lequel les dimensions du diaphragme de champ sont inférieures ou égales aux dimensions de la pupille d'une microlentille, divisées par le grandissement optique ($G$) défini par le ou les élément(s) optique(s).

5. Système d'imagerie microscopique selon l'une quelconque des revendications précédentes, dans lequel le diaphragme de champ (118) présente des dimensions variables.

6. Système d'imagerie microscopique selon l'une quelconque des revendications précédentes, dans lequel le diaphragme de champ comprend une position variable dans le ledit plan ($P_2$) conjugué optiquement avec le plan de détection ($P_3$).

7. Système d'imagerie microscopique selon l'une quelconque des revendications précédentes, dans lequel le diaphragme de champ est structuré spatialement avec une fréquence spatiale donnée selon une direction.

8. Système d'imagerie microscopique selon l'une quelconque des revendications précédentes, dans lequel le détecteur bidimensionnel comprend un agencement bidimensionnel de détecteurs élémentaires et une tache de diffraction d'une microlentille comprend selon une direction entre 0,2 et 2 détecteurs élémentaires.

9. Système d'imagerie microscopique selon l'une quelconque des revendications précédentes, dans lequel ledit élément séparateur de faisceaux (135) est un élément dichroïque permettant la réflexion de la lumière selon une première bande spectrale et la transmission de la lumière selon une deuxième bande spectrale, distincte de la première bande spectrale.

10. Système d'imagerie microscopique selon l'une quelconque des revendications précédentes, comprenant en outre un dispositif de correction du front d'onde (145) comprenant un plan de correction ($P_7$) conjugué optiquement avec le plan pupillaire ($P_4$), ledit plan de correction étant compris dans la voie d'analyse, ledit dispositif de correction étant configuré pour corriger un front d'onde issu de l'objet et analysé par ledit dispositif d'analyse.

11. Système d'imagerie microscopique de fluorescence (200) de type feuille de lumière, selon l'une quelconque des revendications précédentes, dans lequel la voie d'éclairage (105) est configurée pour former ladite section optique par illumination transverse de l'objet.

12. Système d'imagerie microscopique de fluorescence (300) de type multiphotonique, selon l'une quelconque des revendications 1 à 10, dans lequel la voie d'éclairage (105) comprend :

- une ou plusieurs source(s) laser (150) pour l'émission d'impulsions ultra brèves, ledit objectif de microscope (130) permettant de focaliser chaque impulsion en un point de focalisation d'un plan focal dudit objectif pour former une émission de fluorescence multiphotonique ;
- un dispositif de balayage (152) configuré pour un balayage transverse dudit point de focalisation.

13. Procédé d'imagerie microscopique d'un objet au moyen d'un système d'imagerie microscopique de fluorescence à sectionnement optique selon l'une quelconque des revendications précédentes, comprenant :

- l'illumination de l'objet selon une section optique au moyen de la voie d'éclairage;
- l'imagerie de ladite section optique de l'objet dans le plan de détection d'imagerie du détecteur d'imagerie (140) de la voie d'imagerie;

- l'analyse d'un front d'onde issu de ladite section optique de l'objet au moyen de la voie d'analyse comprenant ledit objectif de microscope et ledit dispositif d'analyse d'un front d'onde ; dans lequel :

- l'illumination de l'objet comprend une première illumination pour l'excitation de fluorescence pour la voie d'imagerie, et une deuxième illumination pour l'excitation de fluorescence pour la voie d'analyse, la deuxième illumination produisant un éclairage structuré de l'objet selon un motif bidimensionnel en forme de croix.

**Patentansprüche**

1. Mikroskopisches Fluoreszenz-Abbildungssystem (100) mit optischer Sektionierung eines fluoreszierenden Volumenobjekts (10), beinhaltend:

- einen Pfad zur Beleuchtung (105) des Objekts;
- einen Pfad zur Abbildung (103) einer optischen Sektion des Objekts, beinhaltend ein Mikroskopobjektiv (130) mit einer Pupille in einer Pupillenebene ($P_4$) und einen Abbildungsdetektor (140), der eine Abbildungsdetektionsebene ($P_6$) beinhaltet, wobei die optische Sektion eine Fokalebene ($P_1$) des Mikroskopobjektivs überlagert;
- einen Analysepfad (101), beinhaltend das Mikroskopobjektiv und eine Vorrichtung zur Analyse einer Wellenfront (110), die dazu konfiguriert ist, eine von dem Objekt ausgehende Wellenfront zu analysieren;
- ein Strahlteilungselement (135), das es gestattet, den Analysepfad und den Abbildungspfad zu teilen; wobei die Analysevorrichtung Folgendes beinhaltet:

- einen zweidimensionalen Detektor (112), der eine Detektionsebene ($P_3$) beinhaltet, die mit der Fokalebene ($P_1$) des Mikroskopobjektivs konjugiert ist;
- eine zweidimensionale Anordnung (114) von Mikrolinsen (115), die in einer Analyseebene ($P_5$) eingerichtet ist, wobei jede Mikrolinse dazu konfiguriert ist, auf der Detektionsebene ($P_3$) ein Bild des Objekts, das sich in der Fokalebene ($P_1$) des Mikroskopobjektivs befindet, mit einem gegebenen Analysefeld zu bilden;
- ein optisches Relaissystem (116), das dazu konfiguriert ist, die Analyseebene und die Pupillenebene ($P_4$) optisch zu konjugieren;
- eine Verarbeitungseinheit (120), die dazu konfiguriert ist, anhand des Satzes der durch die Mikrolinsen gebildeten Bilder eine zweidimensionale Karte eines charakteristischen Parameters der Wellenfront in der Analyseebene zu bilden, wobei:

- der charakteristische Parameter der Wellenfront eine lokale Steigung gemäß zwei Dimensionen der Wellenfront in der Analyseebene beinhaltet; und
- das Bestimmen der zweidimensionalen Karte das Bestimmen von Änderungen der Positionen der durch die Mikrolinsen gebildeten Bilder beinhaltet, wobei die Positionsänderung eines durch eine Mikrolinse gebildeten Bildes in Bezug auf eine Referenzposition eines Referenzbildes gemessen wird, wobei die Positionsänderung durch eine Interkorrelationsoperation zwischen dem Bild und dem Referenzbild bestimmt wird;

wobei das mikroskopische Abbildungssystem **dadurch gekennzeichnet ist, dass**:

- die Wellenfront-Analysevorrichtung eine Feldblende (118) beinhaltet, die in einer Ebene ($P_2$), die mit der Detektionsebene ($P_3$) der Analysevorrichtung optisch konjugiert ist, positioniert ist und dazu konfiguriert ist, das Analysefeld zu definieren; und dass
- der Beleuchtungspfad für eine erste Illuminierung des Objekts zur Fluoreszenzanregung für den Abbildungspfad und eine zweite Illuminierung des Objekts zur Fluoreszenzanregung für den Analysepfad konfiguriert ist, wobei die zweite Illuminierung eine strukturierte Beleuchtung des Objekts gemäß einem zweidimensionalen Muster in Form eines Kreuzes produziert.

2. Mikroskopisches Abbildungssystem nach Anspruch 1, wobei die Mikrolinsen (115) eine quadratische Pupille aufweisen und aneinandergrenzen.

3. Mikroskopisches Abbildungssystem nach einem der vorhergehenden Ansprüche, wobei die Mikrolinsen eine Pupille mit gegebener Form aufweisen, wobei die Feldblende (118) eine zu der Form der Pupille der Mikrolinsen identische Form beinhaltet.

4. Mikroskopisches Abbildungssystem nach Anspruch 3, ferner beinhaltend ein oder mehrere optische Elemente, die es gestatten, die optische Konjugation zwischen der Ebene der Feldblende und der Detektionsebene vorzunehmen, und wobei die Abmessungen der Feldblende kleiner als oder gleich den Abmessungen der Pupille einer Mikrolinse sind, geteilt durch die optische Vergrößerung (G), die durch das oder die optischen Elemente definiert wird.

5. Mikroskopisches Abbildungssystem nach einem der vorhergehenden Ansprüche, wobei die Feldblende (118) variable Abmessungen aufweist.

6. Mikroskopisches Abbildungssystem nach einem der vorhergehenden Ansprüche, wobei die Feldblende in der Ebene ($P_2$), die mit der Detektionsebene ($P_3$) optisch konjugiert ist, eine variable Position aufweist.

7. Mikroskopisches Abbildungssystem nach einem der vorhergehenden Ansprüche, wobei die Feldblende mit einer gegebenen Raumfrequenz entlang einer Richtung räumlich strukturiert ist.

8. Mikroskopisches Abbildungssystem nach einem der vorhergehenden Ansprüche, wobei der zweidimensionale Detektor eine zweidimensionale Einrichtung von Elementardetektoren beinhaltet und ein Beugungsfleck einer Mikrolinse entlang einer Richtung zwischen 0,2 und 2 Elementardetektoren beinhaltet.

9. Mikroskopisches Abbildungssystem nach einem der vorhergehenden Ansprüche, wobei das Strahlteilungselement (135) ein dichroitisches Element ist, das die Reflexion des Lichts gemäß einem ersten Spektralband und die Übertragung des Lichts gemäß einem zweiten Spektralband, das sich von dem ersten Spektralband unterscheidet, gestattet.

10. Mikroskopisches Abbildungssystem nach einem der vorhergehenden Ansprüche, ferner beinhaltend eine Vorrichtung zur Korrektur der Wellenfront (145), beinhaltend eine Korrekturebene ($P_7$), die mit der Pupillenebene ($P_4$) optisch konjugiert ist, wobei die Korrekturebene in dem Analysepfad enthalten ist, wobei die Korrekturvorrichtung dazu konfiguriert ist, eine von dem Objekt ausgehende und durch die Analysevorrichtung analysierte Wellenfront zu korrigieren.

11. Mikroskopisches Fluoreszenz-Abbildungssystem (200) vom Typ Lichtscheibe nach einem der vorhergehenden Ansprüche, wobei der Beleuchtungspfad (105) dazu konfiguriert ist, die optische Sektion durch eine transversale Illuminierung des Objekts zu bilden.

12. Mikroskopisches Fluoreszenz-Abbildungssystem (300) vom Typ Multiphotonen nach einem der Ansprüche 1 bis 10, wobei der Beleuchtungspfad (105) Folgendes beinhaltet:

- eine oder mehrere Laserquellen (150) zur Emission ultrakurzer Impulse, wobei das Mikroskopobjektiv (130) es gestattet, jeden Impuls an einem Fokalisierungspunkt einer Fokusebene des Objektivs zu fokussieren, um eine Multiphotonen-Fluoreszenzemission zu bilden;
- eine Abtastvorrichtung (152), die für eine transversale Abtastung des Fokalisierungspunkts konfiguriert ist.

13. Verfahren zur mikroskopischen Abbildung eines Objekts mit Hilfe eines mikroskopischen Fluoreszenz-Abbildungssystems mit optischer Sektionierung nach einem der vorhergehenden Ansprüche, beinhaltend:

- Illuminieren des Objekts gemäß einer optischen Sektion mit Hilfe des Beleuchtungspfads;
- Abbilden der optischen Sektion des Objekts in der Abbildungsdetektionsebene des Abbildungsdetektors (140) des Abbildungspfads;
- Analysieren einer Wellenfront, die von der optischen Sektion des Objekts ausgeht, mit Hilfe des Analysepfads, der das Mikroskopobjektiv und die Vorrichtung zur Analyse einer Wellenfront beinhaltet; wobei:

- das Illuminieren des Objekts eine erste Illuminierung zur Fluoreszenzanregung für den Abbildungspfad und eine zweite Illuminierung zur Fluoreszenzanregung für den Analysepfad beinhaltet, wobei die zweite Illuminierung eine strukturierte Beleuchtung des Objekts gemäß einem zweidimensionalen Muster in Form eines Kreuzes produziert.

**Claims**

1. A fluorescence microscopic imaging system (100) with optical sectioning of a volumetric and fluorescent object (10) comprising:

- an illumination path (105) for the illumination of the object;
- an imaging path (103) for imaging an optical section of the object, comprising a microscope objective lens (130) with a pupil in a pupil plane ($P_4$) and an imaging detector (140) comprising an imaging detection plane ($P_6$), said optical section being superimposed on a focal plane ($P_1$) of said microscope objective lens;
- an analysis path (101) comprising said microscope objective lens and a wavefront analysis device (110) configured to analyze a wavefront originating from the object;
- a beam splitter element (135) for splitting said analysis path and said imaging path; the analysis device comprising:

- a two-dimensional detector (112) comprising a detection plane ($P_3$) conjugated with said focal plane ($P_1$) of the microscope objective lens;
- a two-dimensional arrangement (114) of microlenses (115) arranged in an analysis plane ($P_5$), each microlens being configured to form on the detection plane ($P_3$) an image of the object located in the focal plane ($P_1$) of the microscope objective lens, with a given analysis field-of-view;
- an optical relay system (116) configured to optically conjugate the analysis plane and the pupil plane ($P_4$);
- a processing unit (120) configured to determine, based on the set of images formed by the microlenses, a two-dimensional map of a characteristic parameter of the wavefront in said analysis plane, wherein:

- the characteristic parameter of the wavefront comprises a local slope in two dimensions of the wavefront in the analysis plane; and
- determining said two-dimensional map comprises determining variations of the positions of the images formed by the microlenses, the variation of position of an image formed by a microlens being measured in relation to a reference position of a reference image, the variation of position being determined by a cross-correlation operation between said image and the reference image; the microscopic imaging system being **characterized in that**:
- the wavefront analysis device comprises a field diaphragm (118) positioned in a plane ($P_2$) optically conjugated with the detection plane ($P_3$) of the analysis device and configured to define said analysis field-of-view; and **in that**:

- the illumination path is configured for a first illumination of the object for the fluorescence excitation for the imaging path, and a second illumination of the object for the fluorescence excitation for the analysis path, the second illumination producing a structured illumination of the object according to a cross-shaped two-dimensional pattern.

2. The microscopic imaging system as claimed in claim 1, wherein said microlenses (115) have a square pupil and are joined together.

3. The microscopic imaging system as claimed in any one of the preceding claims, wherein the microlenses have a pupil of a given shape, the field diaphragm (118) having an identical shape to the shape of said pupil of the microlenses.

4. The microscopic imaging system as claimed in claim 3, further comprising one or more optical element(s) allowing optical conjugation to be carried out between the plane of the field diaphragm and the detection plane and wherein the dimensions of the field diaphragm are less than or equal to the dimensions of the pupil of a microlens, divided by the optical magnification (G) defined by the one or more optical element(s).

5. The microscopic imaging system as claimed in any one of the preceding claims, wherein the field diaphragm (118) has variable dimensions.

6. The microscopic imaging system as claimed in any one of the preceding claims, wherein the field diaphragm has a variable position in said plane ($P_2$) optically conjugated with the detection plane ($P_3$).

7. The microscopic imaging system as claimed in any one of the preceding claims, wherein the field diaphragm is spatially structured with a given spatial frequency in one direction.

8. The microscopic imaging system as claimed in any one of the preceding claims, wherein the two-dimensional detector comprises a two-dimensional arrangement of elementary detectors and a diffraction spot of a microlens comprises, in one direction, between 0.2 and 2 elementary detectors.

9. The microscopic imaging system as claimed in any one of the preceding claims, wherein said beam splitter element (135) is a dichroic element allowing light to be reflected in a first spectral band and light to be transmitted in a second spectral band, separate from the first spectral band.

10. The microscopic imaging system as claimed in any one of the preceding claims, further comprising a wavefront correction device (145) comprising a correction plane ($P_7$) optically conjugated with the pupil plane ($P_4$), said correction plane being included in the analysis path, said correction device being configured to correct a wavefront originating from the object and analyzed by said analysis device.

11. A light-sheet type fluorescence microscopic imaging system (200) as claimed in any one of the preceding claims, wherein the illumination path (105) is configured to form said optical section by transverse illumination of the object.

12. A multiphoton type fluorescence microscopic imaging system (300) as claimed in any one of claims 1 to 10, wherein the illumination path (105) comprises:

- one or more laser source(s) (150) for emitting ultrashort pulses, said microscope objective lens (130) allowing each pulse to be focused at a focusing point of a focal plane of said objective lens in order to form a multiphoton fluorescence emission;
- a scanning device (152) configured to transversely scan said focusing point.

13. A method for microscopic imaging of an object by means of a fluorescence microscopic imaging system with optical sectioning as claimed in any one of the preceding claims, comprising:

- illuminating the object along an optical section by means of said illumination path;
- imaging said optical section of the object in said detection plane of said imaging detector (140) of the imaging path;
- analyzing a wavefront originating from said optical section of the object by means of said analysis path comprising said microscope objective lens and said wavefront analysis device; wherein:

- the illumination of the object comprises a first illumination for the fluorescence excitation for the imaging path, and a second illumination for the fluorescence excitation for the analysis path, the second illumination producing a structured illumination of the object according to a cross-shaped two-dimensional pattern.

FIG.1

FIG.2B

FIG.2A

FIG.3

FIG.4

FIG.5

FIG.6

FIG.7A

FIG.7B

EP 3 918 292 B1

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 855730 B2
- US 20150362713 A

**Littérature non-brevet citée dans la description**

- **M. J. BOOTH**. *Adaptive optics for fluorescence microscopy*
- **K. LAWRENCE et al.** *Scene-based Shack-Hartmann wavefront sensor for light-sheet microscopy*
- Adaptive optics for fluorescence microscopy. **M. J. BOOTH** ; **A. CORNEA et al.** Fluorescence Microscopy : Super-resolution and other Novel Techniques. Academic Press, 2014
- **N. JI**. Adaptive optical fluorescence microscopy. *Nature Methods*, 2017, vol. 14, 374-380
- **K. LAWRENCE et al.** Scene-based Shack-Hartmann wavefront sensor for light-sheet microscopy. *Adaptive Optics and Wavefront Control for Biological Systems IV*, 2018
- **R. JORAND et al.** Deep and Clear Optical Imaging of Thick Inhomogeneous Samples. *PLOS ONE*, 25 April 2012, vol. 7 (4)
- **H. MASAYUKI et al.** The development of an adaptive optics system and its application to biological microscope. *Proceedings of SPIE, SPIE*, 31 October 2016, vol. 10021